(19) Europäisches Patentamt
European Patent Office
Office européen des brevets

(11) EP 4 194 416 A1

(12) # EUROPÄISCHE PATENTANMELDUNG

(43) Veröffentlichungstag:
**14.06.2023 Patentblatt 2023/24**

(21) Anmeldenummer: **22210935.7**

(22) Anmeldetag: **01.12.2022**

(51) Internationale Patentklassifikation (IPC):
***C03C 10/00*** (2006.01) ***C03C 21/00*** (2006.01)
***C03C 3/085*** (2006.01) ***C03C 3/087*** (2006.01)
***C03C 3/093*** (2006.01) ***C03C 3/097*** (2006.01)

(52) Gemeinsame Patentklassifikation (CPC):
**C03C 3/085; C03C 3/087; C03C 3/093;**
**C03C 3/097; C03C 10/0027; C03C 21/002**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**KH MA MD TN**

(30) Priorität: **10.12.2021 DE 102021132738**
**03.06.2022 DE 102022114184**

(71) Anmelder:
- **SCHOTT AG**
  **55122 Mainz (DE)**
- **SCHOTT Technical Glass Solutions GmbH**
  **07745 Jena (DE)**

(72) Erfinder:
- **DIETRICH, Rüdiger**
  **07745 Jena (DE)**
- **RÜDINGER, Bernd**
  **55286 Wörrstadt (DE)**
- **SCHNEIDER, Meike**
  **65232 Taunusstein (DE)**
- **ALKEMPER, Jochen**
  **55270 Klein-Winternheim (DE)**
- **MÜLLER, Lars**
  **65201 Wiesbaden (DE)**
- **PFEIFFER, Thomas**
  **55218 Ingelheim (DE)**
- **KOCH, Julian**
  **55131 Mainz (DE)**

(74) Vertreter: **Blumbach · Zinngrebe Patentanwälte PartG mbB**
**Alexandrastraße 5**
**65187 Wiesbaden (DE)**

(54) **GLASKERAMISCHE DECKSCHEIBE, VERFAHREN ZU DEREN HERSTELLUNG SOWIE DEREN VERWENDUNG UND DIGITALES ANZEIGEGERÄT UMFASSEND EINE SOLCHE DECKSCHEIBE**

(57) Die vorliegende Erfindung betrifft allgemein eine glaskeramische Deckscheibe, ein Verfahren zu deren Herstellung sowie deren Verwendung sowie ein digitales Anzeigegerät, welches eine solche Deckscheibe umfasst.

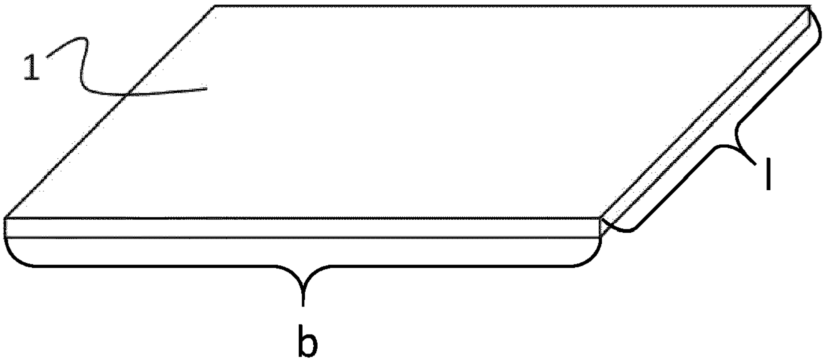


Fig. 1

EP 4 194 416 A1

## Beschreibung

### Gebiet der Erfindung

Die vorliegende Erfindung betrifft allgemein eine glaskeramische Deckscheibe, ein Verfahren zu deren Herstellung sowie deren Verwendung sowie ein digitales Anzeigegerät, welches eine solche Deckscheibe umfasst.

### Hintergrund der Erfindung

Deckscheiben, welche in Anzeigegeräten zum Einsatz kommen, sind bereits seit langem Stand der Technik. Häufig werden solche Deckscheiben auch als "Cover" oder "Coverglas" bezeichnet. In den meisten Fällen umfassen solche Deckscheiben, die zum Schutz der hinter diesen Scheiben angeordneten elektronischen Komponenten und Anzeigeeinrichtungen angeordnet sind, beispielsweise in einer Smartwatch oder in einem Smartphone, ein chemisch vorgespanntes Glas, um die mechanische Beständigkeit der Deckscheibe im Vergleich zum nicht-vorgespannten Zustand zu erhöhen. Weiterhin ist es auch bekannt, Glaskeramikscheiben zu verwenden, wobei vorzugsweise solche Glaskeramiken zum Einsatz kommen, welche bereits intrinsisch mechanisch beständiger sind als ein nicht-vorgespanntes Glas.

Je nach der genauen Ausgestaltung einer Glaskeramik kann auch diese vorspannbar ausgebildet werden. Hier sind prinzipiell zwei Mechanismen denkbar. So umfasst die Glaskeramik neben kristallinen Bestandteilen noch einen glasigen Bestandteil, welcher auch als "Restglasphase" bezeichnet werden kann. Wird eine Glaskeramik chemisch vorgespannt, ist es daher möglich, dass ein Ionenaustausch in der Glasphase selbst erfolgt und insofern recht ähnlich vor sich geht wie bei einem Glas ohne kristalline Bestandteile. Es ist aber auch möglich und kann sogar vorteilhaft sein, wenn der Ionenaustausch beim chemischen Vorspannen in eine von der Glaskeramik umfasste Kristallphase hinein erfolgt.

Eine Übersicht über unterschiedliche Mechanismen beim Vorspannen von Glaskeramiken bietet beispielsweise G.H. Beall et al., "Ion-Exchange in Glass-Ceramics", Frontiers in Materials 2016, 3, Article 41.

Die US-amerikanische Patentanmeldung US 2020/0346969 A1 beschreibt ein kristallisiertes dreidimensional geformtes Glas, das chemisch vorgespannt wird. Die Glaskeramik umfasst als kristalline Phase Keatit. Die Keimbildung erfolgt bevorzugt rein über $ZrO_2$ als Keimbildner.

Die US-amerikanische Patentanmeldung US 2021/0292225 A1 beschreibt eine chemisch vorgespannte Glasplatte, eine Deckscheibe und ein elektronisches Gerät, welches eine solche Deckscheibe umfasst. Das chemisch vorgespannte Glas kann auch als teilweise kristallisiertes Glas vorliegen und beispielsweise Keatit als Kristallphase umfassen. Die Keimbildung erfolgt in diesem Fall vorzugsweise über die Keimbildner $ZrO_2$ und $SnO_2$.

Glaskeramiken umfassend Keatit als kristalline Phase können zwar bereits intrinsisch eine hohe Festigkeit aufweisen und sind auch gut chemisch vorspannbar, weisen jedoch meist eine deutliche Trübung auf, sodass Deckscheiben für Anzeigegeräte mit solchen Glaskeramiken zwar möglich sind, jedoch schwierig herstellbar.

Es besteht daher Bedarf an chemisch vorspannbaren Glaskeramiken für den Einsatz als Deckscheibe für elektronische Anzeigegeräte, welche in guter optischer Qualität mit einem robusten Herstellungsverfahren herstellbar sind. Ebenso besteht Bedarf an einem entsprechenden Herstellungsverfahren für solche Glaskeramiken bzw. für Deckscheiben umfassend eine solche Glaskeramik.

### Aufgabe der Erfindung

Die Aufgabe der Erfindung besteht in der Bereitstellung einer Deckscheibe umfassend eine silikatische Glaskeramik, welche die vorgenannten Schwächen des Standes der Technik zumindest teilweise mindert. Weitere Aspekte betreffen ein Verfahren zur Herstellung einer solchen Deckscheibe sowie deren Verwendung.

### Zusammenfassung der Erfindung

Die Aufgabe der Erfindung wird gelöst durch den Gegenstand der unabhängigen Ansprüche. Spezielle und bevorzugte Ausgestaltungen finden sich in den abhängigen Ansprüchen sowie in Beschreibung und Zeichnungen der vorliegenden Offenbarung.

Die Erfindung betrifft also eine Deckscheibe mit einer Dicke von 0,4 mm bis 0,85 mm, umfassend eine silikatische Glaskeramik, wobei die Deckscheibe einen Lichttransmissionsgrad, $\tau_{vis}$, im Bereich von 380 nm bis 780 nm von mehr als 80%, vorzugsweise von mehr als 85% aufweist, vorzugsweise bestimmt bei Dicken der Deckscheibe von 0,4 mm bis 0,85 mm, insbesondere vorzugsweise bestimmt bei einer Dicke der Deckscheibe von 0,7mm. Die Deckscheibe liegt chemisch vorgespannt vor. Die Deckscheibe weist eine CS (Druckspannung) von wenigstens 250 MPa und vorzugsweise höchstens 1500 MPa auf und/oder eine CS30 (Druckspannung in einer Tiefe von 30 µm, bestimmt von einer der beiden Seitenflächen (oder "Oberflächen") der Deckscheibe aus, von wenigstens 160 MPa und vorzugsweise höchstens 525 MPa und/oder eine DoCL (Dicke der vorgespannten Schicht) von wenigstens dem 0,1-fachen der Dicke der Deckscheibe und vorzugsweise weniger als der Hälfte der Dicke der Deckscheibe. Die silikatische Glaskeramik umfasst wenigstens eine silikatische Kristallphase, die in zumindest einer oberflächennahen Schicht, insbesondere in einer Schicht einer Tiefe von 20 $\mu$m bis 70 $\mu$m, bestimmt in einem rechten Winkel von einer der Seitenflächen der Deckscheibe aus, vorzugsweise gemittelt nach dem Vorspannprozess ein Volumen der Elementarzelle aufweist, das mindestens 1 Vol.-%, bevorzugt mindestens 2 Vol.-% größer ist als das der Kristallphase im Kern. Unter dem Kern der Deckscheibe wird das Gefüge der Deckscheibe in einer Schicht unterhalb von 70 $\mu$m, bestimmt in einem rechten Winkel von einer der beiden Seitenflächen der Deckscheibe aus, verstanden. Mit anderen Worten kann der Kern der Deckscheibe auch als deren "Bulk" verstanden werden. Allgemein liegt im Kern der Deckscheibe ein Minimum der Spannung vor.

Die Bestimmung der Elementarzellenvolumen erfolgt über Dünnschichtröntgenbeugungsmessungen. Je nach Einfallswinkel $\Omega$ des Röntgenstrahls auf die plane Probenoberfläche (z.B. $\Omega$=0.5° bis $\Omega$=5°) ergeben sich Informationstiefen von ca. 2 $\mu$m bis 20 $\mu$m. Aus den Lagen der gemessenen Röntgenbeugungsreflexe können über allgemein gängige Verfahren die Gitterkonstanten und das Elementarzellenvolumen berechnet werden, wobei durch diese Berechnung ein Mittelwert, insbesondere entlang des Strahlengangs der gebeugten Röntgenstrahlen, bereitgestellt wird. Durch gezieltes Abtragen der Oberfläche und anschließenden erneuten Messungen lassen sich so die Elementarzellenvolumen bis in die nicht mehr ionengetauschten Bereiche bestimmen. Die vergleichsweise geringen Änderungen der Gitterkonstanten durch die Druck-, bzw. Zugspannungen in der Glaskeramik können gegenüber den hohen Änderungen der Gitterkonstanten durch den Ionenaustausch in den Kristallstrukturen vernachlässigt werden.

Als Transmission bzw. Lichttransmissionsgrad, oder $\tau_{vis}$, im Sinne der Offenbarung wird die nach DIN 5033 gemessene Lichttransmission zwischen 380 und 780 nm bezeichnet. Diese ist identisch mit dem Y-Wert gemäß dem CIE-Farbsystem, gemessen mit Normlicht C, Beobachterwinkel 2 ° für eine 4 mm dicke polierte Glaskeramikprobe. Dieses Licht entspricht Weißlicht mit einer Farbtemperatur von 6800K und repräsentiert damit mittleres Tageslicht.

Eine Ausgestaltung einer Deckscheibe wie vorstehend beschrieben weist eine Reihe von Vorteilen auf.

Die Deckscheibe umfasst eine silikatische Glaskeramik und liegt damit chemisch bereits sehr resistentes Bauteil vor. Unter einer silikatischen Glaskeramik wird im Rahmen der vorliegenden Offenbarung eine Glaskeramik verstanden, welche $SiO_2$ umfasst und vorzugsweise eine Kristallphase, welche als einen strukturellen Baustein ein $SiO_4^{4-}$-Tetraeder, also ein sogenanntes kristallines Silikat umfasst. Eine silikatische Glaskeramik bringt inhärent bereits eine gute mechanische Beständigkeit mit sich. Weiterhin liegt die Deckscheibe chemisch vorgespannt vor, nämlich aufweisend eine CS (Druckspannung) von wenigstens 250 MPa und vorzugsweise höchstens 1500 MPa und/oder eine CS30 von wenigstens 160 MPa und vorzugsweise höchstens 525 MPa und/oder eine DoCL von wenigstens dem 0,1-fachen der Dicke der Deckscheibe und vorzugsweise weniger als der Hälfte der Dicke der Deckscheibe. Auf diese Weise sind vorteilhafte Eigenschaften der Deckscheibe hinsichtlich der mechanischen Anwendungstests, wie beispielsweise sogenannter "Set-Drop-Tests", die das Verhalten der Deckscheibe im in ein Gerät eingebauten Zustand betreffen, erzielbar, sodass es möglich ist, hinreichend dünne und mithin auch leichte Deckscheiben zu verwenden. Die Deckscheibe weist daher eine Dicke von 0,4 mm bis 0,85 mm auf. Dies ist weiterhin auch deshalb vorteilhaft, weil auf diese Weise hohe Lichttransmissionen, $\tau_{vis}$, von mehr als 80%, vorzugsweise von mehr als 85%, im Wellenlängenbereich zwischen 380 nm bis 780 nm erzielt werden. Vorzugsweise werden die Lichttransmissionswerte zu Vergleichszwecken bestimmt bei einer Dicke der Deckscheibe von 0,7 mm. Dünnere Scheiben können zu Vergleichszwecken, ob sie diese Bedingung erfüllen, gestapelt werden, um eine entsprechende Dicke zu erzielen; dickere Scheiben können gedünnt werden. Allgemein werden diese Lichttransmissionswerte erzielt für Dicken der Deckscheibe zwischen 0,4 mm und 0,85 mm.

Die von der Deckscheibe umfasste silikatische Glaskeramik umfasst wenigstens eine silikatische Kristallphase, die in zumindest einer oberflächennahen Schicht, insbesondere in einer Dicke zwischen 20 $\mu$m und 70 $\mu$m, bestimmt in einem rechten Winkel von einer der Seitenflächen der Deckscheibe aus, vorzugsweise gemittelt nach dem Vorspannprozess ein Volumen der Elementarzelle aufweist, das mindestens 1 Vol.- %, bevorzugt mindestens 2 Vol.-% größer ist als das der Kristallphase im Kern. Mit anderen Worten umfasst die silikatische Glaskeramik eine Kristallphase, welche - im chemisch nicht vorgespannten Zustand - als vorspannbare Kristallphase vorliegt, und im chemisch vorgespannten Zustand der Deckscheibe nach Ausführungsformen vorgespannt in der Form vorliegt, dass sich das Volumen der Elementarzelle wie vorbeschrieben vergrößert hat. Dabei liegt die Vergrößerung der Elementarzelle der Kristallphase im chemisch vorgespannten Zustand nicht über die gesamte der Dicke der Deckscheibe hinweg vor, sondern vielmehr nur innerhalb eines bestimmten Bereichs, nämlich im oberflächennahen Bereich der Deckscheibe. Die Deckscheibe, welche scheibenförmig in dem Sinne ausgestaltet ist, dass ihre Dicke wenigstens eine Größenordnung geringer ist als Länge und Breite, weist mithin zwei Seitenflächen (oder "Seiten") auf, deren Abmessungen durch Länge und Breite bestimmt werden und von denen aus senkrecht nach innen zum Kern der Deckscheibe hin die oberflächennahe Schicht bestimmt wird. Diese oberflächennahe Schicht ist auf beiden Seiten der Deckscheibe ausgebildet. Sie liegt vorzugweise in einer Schicht von 20 $\mu$m bis 70 $\mu$m Tiefe. Hier unterscheidet sich das Volumen der Elementarzelle der Kristallphase von dem der Elementarzelle derselben Kristallphase im Kern der Deckscheibe. Vorzugsweise handelt es sich bei der Kristallphase, deren Elementarzelle in der oberflächennahen Schicht vergrößert gegenüber der Elementarzelle im Kern vorliegt, um eine silikatische Kristallphase.

Zu einer Vergrößerung der Elementarzelle der Kristallphase kommt es also zumindest im oberflächennahen Bereich. Je nach dem genauen Vorspannprotokoll kann der ionenausgetauschte Bereich bis zu 300 μm tief sein. Es hat sich gezeigt, dass es je nach der genauen Tiefe der betrachteten Schicht in der Deckscheibe einen unterschiedlichen Anteil an ionenausgetauschten Kristallphasen gibt. Mit anderen Worten bedeutet dies, dass es bei der Deckscheibe nach Ausführungsformen einen Dickenverlauf gibt. So ist an der Oberfläche der Deckscheibe und vorzugsweise bis in den Bereich einer oberflächennahen Schicht, vorzugsweise von 20 μm bis 70 μm, ein nahezu vollständiger Austausch erfolgt, wie dies in entsprechenden EDX-Profilen gezeigt werden kann, bis hin zu einem Minimum. Bei langen Vorspannprotokollen mit beispielsweise 12 Stunden Vorspannzeit ist ein Ionenaustausch bis ca. 300 μm Tiefe nachweisbar. Die DoCL liegt hier bei 145 μm, in der Deckscheibe bildet sich mithin eine Druckspannungskurve aus gemäß dem Vermögen des Materials, Zugspannung zu speichern. Die Erfinder gehen davon aus, dass in Bereichen unterhalb der mittels physikalischer Messtechnik bestimmten DoCL vorliegende Kristalle bzw. Kristallite bzw. Kristallphasen, die ionenausgetauscht sind, nicht zur Druckspannung beitragen, weil ihr Anteil an den Kristallphasen geringer ist,sodass damit eine Vorspannung vorliegt, weil das vergrößerte Volumen der Kristallphase im oberflächennahen Bereich auf beiden Seiten der Deckscheibe damit eine Druckspannung auf den innenliegenden Kern der Deckscheibe erzeugt.

Mit anderen Worten wird hier eine Vorspannung nicht über einen Austausch in eine glasige Phase erzielt, sondern in eine kristalline Phase. Dabei hat sich weiterhin gezeigt, dass bei einer solchen chemischen Vorspannung mit einem Austausch von Ionen, der in einer kristallinen Phase stattfindet, eine sehr effiziente Vorspannung stattfindet. Überraschenderweise ist diese sogar besser als ein Ionenaustausch für ein glasiges Material derselben chemischen Zusammensetzung, welches allerdings nicht kristallisiert vorliegt. Zwar wird eine gleiche Menge an Ionen ausgetauscht, doch ist die in der Deckscheibe nach Ausführungsformen ausgebildete Vorspannung besser. Mit anderen Worten führt in einer Deckscheibe nach Ausführungsformen, umfassend eine silikatische Glaskeramik, die gleiche Menge an ausgetauschten Ionen zu einer höheren Vorspannung. Der Vorspannprozess ist also effizienten in Bezug auf die ausgebildete Vorspannung. Dies ist beispielhaft auch in Fig. 9 der Figuren ersichtlich, in welchem ein Vorspannprofil einer Deckscheibe nach einer Ausführungsform einem Vorspannprofil für eine Deckscheibe umfassend ein Material gleicher chemischer Zusammensetzung, jedoch unkeramisiert, einander gegenübergestellt ist. Vorspannprofil 5 entspricht dabei dem einer Deckscheibe nach einer Ausführungsform, Vorspannprofil 6 dem einer Deckscheibe umfassend ein Material gleicher chemischer Zusammensetzung, jedoch glasig ausgebildet und nicht keramisiert.

So wird bei gleichem Austauschgrad, also bei einer im Wesentlichen gleichen Menge von ausgetauschten Ionen aus dem Tauschbad, eine effizientere Vorspannung erzielt. Es lässt sich also beim Austausch in die kristalline Phase effizienter Druckspannung aufbauen als beim einem Austausch in ein glasiges Material. Gleichzeitig gibt es Hinweise darauf, dass auf diese Weise die so erzeugte Vorspannung in einer Glaskeramik eine größere thermische und zeitliche Stabilität aufweist als bei einem chemisch vorgespannten Glas gleicher Zusammensetzung. So könnte es sein, dass die in die Glaskeramik eingebrachte Vorspannung mittels eines Ionenaustauschs in die Kristallphase möglicherweise nicht so schnell relaxiert wie chemische Vorspannung, welche in das glasige Material eingebracht wurde. Weiterhin zeigt sich, dass die speicherbare Vorspannung in das glaskeramische Material höher ist als die in einem glasigen Material gleicher chemischer Zusammensetzung (siehe hierzu ebenfalls Fig. 9 der Zeichnungen der vorliegenden Offenbarung).

Die vorteilhaften Eigenschaften, welche mit der Deckscheibe nach Ausführungsformen der vorliegenden Offenbarung verbunden sind, beruhen darauf, dass bei gleichem Vorspannprozess - also beispielsweise bei gleicher Vorspannzeit - eine größere Druckspannung in der Deckscheibe aus oder umfassend Glaskeramik erzeugt werden kann als bei einer Deckscheibe aus oder umfassend Glas der gleichen chemischen Zusammensetzung. Bei gleichem Vorspannprozess ist damit die maximale Zugspannung in der Deckscheibe nach Ausführungsformen höher als bei einer Deckscheibe aus oder umfassend Glas mit der gleichen chemischen Zusammensetzung wie die korrespondierende Glaskeramik. Hierbei sind jeweils die Zusammensetzungen von Glas bzw. Glaskeramik vor Durchführung eines Vorspannprozesses gemeint.

So hat sich gezeigt, dass der maximale Wert der Zugspannung bei einer Deckscheibe nach einer Ausführungsform, welche die gleiche chemische Zusammensetzung aufweist wie eine Deckscheibe aus oder umfassend ein Glas und den gleichen Vorspannprozess durchlaufen hat, um einen Faktor bis 1,6 größer ist als die maximale Zugspanung (CT) in der Deckscheibe aus oder umfassend das entsprechende Glas.

Für eine Deckscheibe nach einer Ausführungsform und als Vergleich eine Deckscheibe aus einem Glas der chemisch gleichen Zusammensetzung der Glaskeramik konnten als maximale Zugspannung (center tension, CT) die folgenden Werte ermittelt werden:

| | CT [MPa] |
|---|---|
| Glaskeramik | 215 |

(fortgesetzt)

| | CT [MPa] |
|---|---|
| Glas (Grünglas) | 145 |

Als Verhältnis der CT-Werte von glaskeramischer Deckscheibe zu glasiger Deckscheibe (beide Deckscheiben wurden dem identischen Vorspannprozess unterzogen) ergibt sich 1,48.

Allgemein kann dieses Verhältnis zwischen 1,3 und 1,6 liegen, insbesondere bis 1,5.

Diesen charakteristischen Unterschied in den CT-Werten kann man beispielsweise auch der Darstellung von Vorspannprofilen, wie sie in Fig. 9 wiedergegeben sind, entnehmen.

Diese besonders gute Vorspannung, die in den Deckscheiben nach der vorliegenden Offenbarung erzielbar ist und erzielt wird, wird auf die Vorspannung, also den Ionenaustausch, gerade in die kristalline Phase zurückgeführt. Diese führt zum einen zu einer Vergrößerung der kristallinen Elementarzelle, welche also ein besonderes Kennzeichen der vorteilhaften Deckscheiben nach Ausführungsformen ist. Weiterhin führt dies dazu, dass beispielsweise bei Deckscheiben nach Ausführungsformen auch besonders gute Ergebnisse in einem sogenannten Set-Drop-Test erhalten werden können.

Gemäß einer Ausführungsform der Deckscheibe umfasst die Kristallphase zumindest in der oberflächennahen Schicht, d.h. also mit anderen Worten nach dem Vorspannprozess, einen höheren Anteil an Natriumoxid $Na_2O$ und/oder Kaliumoxid $K_2O$ als im Kern. Die Erfinder gehen davon aus, dass der Gehalt der Kristallphase an Natriumoxid $Na_2O$ und/oder Kaliumoxid $K_2O$ im oberflächennahen Bereich absolut um wenigstens 1 Mol-%, vorzugsweise um absolut wenigstens 2 Mol-% und insbesondere vorzugsweise um bis zu absolut 7 Mol-%, gegenüber dem entsprechenden Gehalt der Kristallphase im Kern erhöht ist.

Besonders entscheidend kann dabei je nach Ausführungsform gerade das Natriumion $Na^+$ sein. Denn es ist kleiner als das Kaliumion und kann daher leichter ausgetauscht werden und erreicht deshalb höhere Austauschtiefen, beispielsweise in eine von ungefähr dem 0,1 bis zum 0,4fachen der Dicke der Deckscheibe. Austauschtiefen von beispielsweise 70 $\mu$m oder mehr sind damit auf einfache Art und Weise möglich. Erzielte Vorspannungswerte an der Oberfläche der Deckscheibe betragen um etwa 600 MPa oder weniger, beispielsweise um 500 MPa.

Da das Kaliumion, wie ausgeführt, größer ist als das Natriumion, ist die Diffusion des Kaliumions in die Deckscheibe hinein erschwert. Hier werden zwar geringe Austauschtiefen erzielt, allerdings ist die mittels eines Kalimaustauschs erzielte Vorspannung auch höher als die mittels eines Natriumaustauschs. Auf diese Weise können Druckspannungswerte an der Oberfläche der Deckscheibe bei bis zu 1500 MPa liegen, beispielsweise bei 1100 MPa.

Gemäß einer Ausführungsform umfasst die Glaskeramik der Deckscheibe mehr als 50 Vol.-% Kristallphase, vorzugsweise mehr als 70 Vol.-% Kristallphase, und besonders bevorzugt höchstens 95 Vol.-% Kristallphase. Es handelt sich mithin um eine Glaskeramik, die nur einen geringen Rest an glasigem Material (sogenannter Restglasphase) umfasst. Es hat sich gezeigt, dass auf diese Weise eine besonders effiziente Vorspannung erzielbar ist. Der Grund hierfür ist noch nicht ganz verstanden, kann aber möglicherweise darauf zurückgeführt werden, dass ein großes Volumen der vorhandenen Kristallphase in der Glaskeramik der Deckscheibe eine bessere Vorspannung bedingt. Mit anderen Worten könnte es sein, dass eine höhere Vorspannung erzielt wird, je mehr Kristalle bzw. Kristallite für einen Ionenaustausch zur Verfügung stehen. So hat sich zwar gezeigt, dass, wie auch vorstehend ausgeführt, der Austausch in die kristalline Phase sehr effizient ist. Die Erfinder vermuten, dass sogar bei ansonsten gleichen Tauschraten eine im Vergleich zu einem glasigen Material gleicher chemischer Zusammensetzung besseren, da höheren und auch stabileren chemischen Vorspannung erhalten wird. Überraschend ist die gute Vorspannbarkeit in eine kristalline Phase oder Kristallphase auch bei hohen Kristallphasengehalten von bis zu 95 Vol.-% oder sogar mehr auch deshalb, weil man bislang davon ausgegangen war, dass der Tauschmechanismus auch über die glasige Phase erfolgt, da hier Ionen mobiler sein sollten als in einer kristallinen Struktur mit festen Gitterplätzen. Trotz der hohen Kristallinität des glaskeramischen Materials ist aber nach dieser Ausführungsform vorteilhaft eine besonders gute und effiziente Vorspannung möglich. Ebenso ist trotz des hohen Kristallphasengehalts eine noch sehr gute Transparenz der Glaskeramik der Deckscheibe - und damit insgesamt der Deckscheibe selbst - gegeben.

Der angegebene Kristallphasengehalt bezieht sich auf den Gesamtgehalt der Glaskeramik an Kristallen, unabhängig davon, welche Phasen genau vorliegen. Gemäß einer bevorzugten Ausführungsform umfasst die Glaskeramik Keatit bzw. Keatit-Mischkristall als Hauptkristallphase, worunter allgemein verstanden wird, dass mehr als 50 Vol.-% der von der Glaskeramik umfassten Kristallphasen mit einer bestimmten, im Falle von Keatit als Hauptkristallphase also mit keatitischer Kristallstruktur vorliegen. Vorzugsweise können bis zu 98,5 Vol.-% der von der Glaskeramik umfassten Kristallphasen oder sogar 100 Vol.-% mit keatitischer Kristallstruktur, also als Keatit oder Keatit-Mischkristall vorliegen. Allerdings ist es auch möglich, dass die Glaskeramik noch Nebenphasen umfasst, beispielsweise kristallin vorliegende Keimbildner.

Gemäß einer weiteren Ausführungsform ist die Deckscheibe gekennzeichnet durch einen Farbwert C* von weniger als 4, bevorzugt von weniger als 3. Mit anderen Worten weist die Deckscheibe nur einen sehr geringen Farbstich auf, sodass auch die Durchsicht durch die Deckscheibe auf eine dahinterliegende Anzeige ohne störende Farbverfälschung ermöglichst ist. Der Farbwert C* oder $C_{ab}$* wird auch als Chroma bezeichnet und berechnet sich aus den Farbwerte a*, b* wie folgt:

$$C^* = \sqrt{((a^*)^2 + (b^*)^2)}$$

Gemäß einer nochmals weiteren Ausführungsform ist die Deckscheibe gekennzeichnet durch einen Haze von 0,01% bis 1% bezogen auf eine Dicke der Deckscheibe von 0,7 mm. Unter dem Haze wird die Trübung verstanden. Mit anderen Worten ist die Deckscheibe nur gering trüb ausgebildet.

Um eine geringe Chromatizität und/oder eine geringe Trübung zu erzielen, kann es vorteilhaft sein, den Gehalt der Glaskeramik an $TiO_2$ begrenzt ist. $TiO_2$ ist eine bekannte Komponente von silikatischen Glaskeramiken, beispielsweise von sogenannten Lithium-Aluminium-Silikatglaskeramiken, wo sie insbesondere einer effizienten Keimbildung dienen kann. Allerdings hat sich gezeigt, dass diese Komponente, auch wenn sie selbst nicht färbt, zu einer Färbung der resultierenden Glaskeramik infolge von Trübung beitragen kann. Die Glaskeramik umfasst daher gemäß einer Ausführungsform $TiO_2$, vorzugsweise zu höchstens 4 Gew.-% $TiO_2$, besonders bevorzugt zu höchstens 3 Gew.-%.

Vorteilhaft ist gemäß einer Ausführungsform die von der Deckscheibe umfasste Glaskeramik als Lithium-Aluminium-Silikatglaskeramik ausgebildet und die Kristallphase als Keatit-Mischkristall. Lithium-Aluminium-Silikatglaskeramiken sind als Material gut bekannt, was hinsichtlich der Herstellung der Glaskeramik deutliche Vorteile bietet. Eine Ausbildung der Glaskeramik als umfassend als kristalline Phase (oder Kristallphase) Keatit-Mischkristall ist weiterhin deshalb vorteilhaft, weil sich gezeigt hat, dass nicht jede Kristallphase im System der Lithium-Aluminium-Silikatglaskeramiken vorspannbar ausgestaltet ist. Gerade Keatit bzw. Keatit-Mischkristall weist allerdings offensichtlich eine Kristallstruktur auf, welche einem Ionenaustausch, und zwar einem, bei welchem Lithium gegen Natrium und/oder Natrium und/oder Lithium gegen Kalium ausgetauscht wird, zugänglich ist. Nachteilig an bekannten Keatit-Mischkristall-Glaskeramiken, gerade solchen, welche bereits intrinsisch eine hohe Festigkeit aufweisen, ist allerdings, dass diese Glaskeramiken zumeist eine starke Trübung aufweisen. Überraschenderweise zeigt sich allerdings, dass Deckscheiben umfassend Keatit-Mischkristall-Glaskeramiken möglich sind, welche gleichzeitig eine geringe Trübung, eine nur geringe Farbigkeit und weiterhin auch einen hohen Lichttransmissionsgrad aufweisen. Der Grund hierfür ist seitens der Erfinder noch nicht gänzlich verstanden.

Es hat sich allerdings gezeigt, dass gerade für Lithium-Aluminium-Silikatglaskeramik und eine Kristallphase Keatit-Mischkristall vorteilhafte Eigenschaften der Deckscheibe resultieren, wenn die Keatit-Mischkristalle in der oberflächennahen Schicht ein Volumen der Elementarzelle von mehr als 510 $Å^3$, bevorzugt mehr als 515 $Å^3$ aufweisen. Die Erfinder vermuten, dass ein Mischkristall einer solchen Ausbildung eine Zusammensetzung aufweist, bei der die optischen Eigenschaften der Kristallphase und der der Restglasphase optimal aufeinander abgestimmt sind in der Form, dass wenig Brechzahlunterschiede zwischen diesen beiden Phasen resultieren. Dies vermindert Trübungseffekte.

Allgemein, ohne Beschränkung auf eine spezielle Ausführungsform, kann nach einer Ausführungsform die Glaskeramik folgende Komponenten in Gew.-% auf Oxidbasis umfassen:

| | |
|---|---|
| $SiO_2$ | 55-75, bevorzugt 62-72 |
| $Al_2O_3$ | 18-27, bevorzugt 18-23 |
| $Li_2O$ | 2,8-5, bevorzugt 3-5. |

Es handelt sich hierbei um eine silikatische Glaskeramik, welche ausreichend gut als Glas schmelzbar ist und nicht zu sofortiger und ungeregelter Kristallisation neigt. In diesem allgemeinen Zusammensetzungsbereich sind insbesondere bekannte Lithium-Aluminium-Silikatglaskeramiken herstellbar, welche beispielsweise hinsichtlich der Schmelz- und Keramisierungsbedingungen gut bekannt sind. Ein Gehalt der Glaskeramik an Lithium ist weiterhin vorteilhaft, weil auf diese Weise ein Austausch von Natrium und/oder Kalium gegen Lithium möglich ist.

Gemäß einer weiteren Ausführungsform umfasst die Glaskeramik MgO, wobei eine bevorzugte Obergrenze bei 8 Gew.-% liegt. Besonders bevorzugt umfasst die Glaskeramik nicht mehr als 4 Gew.-% MgO. MgO ist eine bevorzugte Komponente, weil es die Bildung von Keatit-Mischkristallen fördert. Dies bedeutet, dass ein gewisser Gehalt an MgO zu einer Erniedrigung der Keramisierungstemperatur führt. Bei zu hohen Gehalten an MgO können sich jedoch unerwünschte Nebenphasen bilden, wie beispielsweise Spinell und/oder Magnesiumtitanat. Dies wirkt sich dann negativ auf die Transparenz des resultierenden glaskeramischen Materials aus, insbesondere hinsichtlich dessen Streuung. Daher ist der Gehalt der Glaskeramik an MgO vorteilhaft in den vorstehend genannten Grenzen begrenzt.

Gemäß einer Ausführungsform umfasst die Glaskeramik weiterhin ZnO, vorzugsweise zu höchstens 6 Gew.-%, insbesondere vorzugsweise nicht mehr als 2 Gew.-%. Ein solcher Gehalt an ZnO kann vorteilhaft sein, weil ZnO die Viskosität des Glases absenkt, sodass das Grünglas der Glaskeramik leichter schmelzbar ist. Allerdings führt ZnO in zu großen Gehalten zur Bildung von Fremdphasen, wie beispielsweise Gahnit und damit zu einer erhöhten Streuung.

Andere Erdalkalimetalloxide wie CaO, BaO, können sich ebenfalls positiv auf die Schmelzeigenschaften auswirken. Die Menge solcher Komponenten RO (umfassend die Oxide der Erdalkalimetalle sowie ZnO) sollte jedoch allgemein begrenzt werden, um die Bildung von Fremdphasen zu vermeiden, wie zu einer höheren Streuung und damit zu einer Minderung der Transmission führen können. Weiterhin können insbesondere die Oxide der schwereren Erdalkalien, wie BaO, SrO, verwendet werden, um den Brechungsindex der Restglasphase an die Kristallphase anzupassen und so die Transmission zu optimieren.

Eine besondere Komponente der Glaskeramik nach einer Ausführungsform ist SnOz. $SnO_2$ kann in der Schmelze beispielsweise als Läutermittel wirken, in der Glaskeramik selbst dann als Keimbildner. Bevorzugt umfasst die Glaskeramik der Deckscheibe daher nach einer Ausführungsform $SnO_2$, und zwar vorzugsweise zu höchstens 2 Gew.-%. Besonders bevorzugt sind Gehalt von $SnO_2$ von mindestens 0,05 Gew.-% und vorzugsweise höchstens 1,6 Gew.-%. Höhere Gehalte von $SnO_2$ führen zu einer starken Entglasungsneigung und verschlechtern so die Produzierbarkeit der Glaskeramik.

Auch die Komponenten $ZrO_2$ und $TiO_2$ können in den Glaskeramiken nach Ausführungsformen als Keimbildner wirken. Es hat sich gezeigt, dass die Keimbildung und insbesondere der Gehalt der Glaskeramik an Keimbildnern und deren Verhältnis zueinander bestimmend sein kann für die Ausbildung einer nur gering gefärbten, silikatischen Glaskeramik mit guter Lichttransmission und geringer Trübung. Die Glaskeramik umfasst daher gemäß einer Ausführungsform $TiO_2$, vorzugsweise zu höchstens 4 Gew.-% $TiO_2$, besonders bevorzugt zu höchstens 3 Gew.-%.

Ein sehr effizienter Keimbildner in der Glaskeramik nach einer Ausführungsform ist weiterhin auch $ZrO_2$. Die Glaskeramik umfasst nach einer Ausführungsform daher $ZrO_2$, vorzugsweise zu höchstens 5 Gew.-%, insbesondere vorzugsweise zu höchstens 4 Gew.-%, und besonders bevorzugt mindestens zu 1,2 Gew.-%.

Die Glaskeramik kann weiterhin umfassen $Fe_2O_3$, und zwar bis zu 0,1 Gew.-%. $Fe_2O_3$ ist in den Glaskeramiken nach Ausführungsformen zumeist in der Form von unvermeidlichen Verunreinigungen vorhanden, ist aber gleichzeitig auch förderlich für die Keimbildung, sodass ein gewisser Gehalt an $Fe_2O_3$ auch förderlich sein kann. Um eine möglichst farbneutrale Glaskeramik zu erhalten, sollte der Gehalt an $Fe_2O_3$ allerdings begrenzt werden und beträgt vorzugsweise nicht mehr als 0,02 Gew.-%. Insbesondere sind Gehalt zwischen 0,0001 Gew.-% bis 0,1 Gew.-% möglich, bevorzugt zwischen 0,0001 und 0,02 Gew.-%. Mit anderen Worten ist allgemein der Gehalt der Glaskeramik der Deckscheibe an $Fe_2O_3$ nach einer Ausführungsform kleiner als 0,02 Gew.-%.

Für das Verhältnis der kritischen Komponenten $TiO_2$ und $ZrO_2$ gilt nach einer Ausführungsform der folgende Zusammenhang:

$0 < \Sigma\,(TiO_2+ZrO_2) <$ als 9,5 %, bevorzugt $1{,}2 < \Sigma\,(TiO_2+ZrO_2) < 9{,}5$ %.

Es hat sich gezeigt, dass mit einem solchen Verhältnis der beiden keimbildenden Komponenten $TiO_2$ und $ZrO_2$ zueinander besonders gute Werte hinsichtlich der Trübung und einer geringen Farbigkeit erzielt werden können.

Noch besser kann dies allgemein erzielt werden, wenn in das Verhältnis der Keimbildner zueinander auch die weitere keimbildende Komponente $SnO_2$ einbezogen wird. Nach einer bevorzugten Ausführungsform gilt allgemein:

$0 \leq SnO_2/(ZrO_2+TiO_2) < 0{,}8$, bevorzugt $0{,}01 \leq SnO_2/(ZrO_2+TiO_2) < 0{,}7$.

Insbesondere kann die Glaskeramik nach einer Ausführungsform folgende Komponenten in Gew.-% auf Oxidbasis umfassen:

| | |
|---|---|
| $SiO_2$ | 55-75, bevorzugt 62-72 |
| $Al_2O_3$ | 18-27 |
| $Li_2O$ | 2,8-5, bevorzugt 3-5 |
| $Na_2O$ | 0-4, bevorzugt 0-2 |
| $K_2O$ | 0-4, bevorzugt 0-2 |
| MgO | 0-8, bevorzugt 0-4 |
| CaO | 0-4, bevorzugt 0-2 |
| SrO | 0-4, bevorzugt 0-2 |
| BaO | 0-4, bevorzugt 0-2 |
| ZnO | 0-6, bevorzugt 0-2 |
| $TiO_2$ | 0-4, bevorzugt 0-3 |
| $ZrO_2$ | 0-5, bevorzugt 1,2-4 |
| $B_2O_3$ | 0-2, bevorzugt 0-0,1 |
| $Fe_2O_3$ | 0,0001 - 0,1, bevorzugt 0,0001 - 0,02 |
| $SnO_2$ | 0-2, bevorzugt 0,05-1,6 |

wobei vorzugsweise für die Summe der Komponenten $TiO_2$ und $ZrO_2$ gilt:
$0 < \Sigma (TiO_2+ZrO_2) <$ als 9,5 %, bevorzugt $1,2 < \Sigma (TiO_2+ZrO_2) < 9,5$ %.

Gemäß einer Ausführungsform umfasst die Glaskeramik der Deckscheibe Kristallphasen mit einer Kristallitgröße von 120 nm oder weniger. Vorzugsweise sind die von der Glaskeramik umfassten Kristallite höchstens 90 nm oder kleiner.

Besonders bevorzugt ist eine Ausführungsform, bei welcher die Glaskeramik der Deckscheibe frei von $As_2O_3$ und/oder $Sb_2O_3$ ist. Unter "frei von" diesen Komponenten wird im Rahmen der vorliegenden Offenbarung verstanden, dass diese Komponenten lediglich in Form unvermeidlicher Verunreinigungen oder Spuren vorliegen, in einem Gehalt von je höchstens 500 ppm, bezogen auf das Gewicht, bevorzugt höchstens 100 ppm, bezogen auf das Gewicht.

Gemäß einer weiteren Ausführungsform ist die Deckscheibe gekennzeichnet durch eine sharp-impact-Festigkeit, bestimmt in einem set-drop-Test, zwischen wenigstens 120 cm und bis zu 200 cm Fallhöhe.

Unter einer sogenannten "sharp impact" Festigkeit wird im Rahmen der vorliegenden Offenbarung verstanden, dass ein Smartphone-Dummy, welcher die zu testende Scheibe enthält, mittels eines Fallgerätes derart auf eine raue Oberfläche fällt, das eine Vielzahl kleiner, spitzer Gegenstände (z.B. Sandkörner auf Asphalt, Beton oder Sandpapier) in die zu testende Scheibe eindringen können. Mit anderen Worten handelt es sich also um eine Einwirkung mit einem oder mehreren spitzen Gegenständen, also beispielsweise mit Partikeln, welche sehr geringe Krümmungsradien aufweisen bzw. bei welchen der Winkel eines Anteils der Spitzen weniger als 100° beträgt.

Dabei erreichen glaskeramische Deckscheiben des Types Keatit, die eine chemische Vorspannung der kristallinen Phase aufweisen im Mittel Fallhöhen von ca. 165 cm, also ca. doppelt so hoch wie derselbe Glastyp, der nicht keramisiert ist und wo die chemische Vorspannung traditionell in der Glasphase aufgebaut ist und der im Mittelwert eine Fallhöhe von 77 cm aufweist. Wird derselbe Glastyp unvorteilhaft keramisiert (Typ β-Hochquarzmischkristall), so dass eine chemische Vorspannung weder ausreichend in der Kristallphase noch in der Glasphase ausgebildet werden kann, so ist die Fallhöhe mit 20 cm unzureichend.

Die vorliegende Offenbarung betrifft auch ein Verfahren. Das Verfahren zur Herstellung einer Deckscheibe, insbesondere einer Deckscheibe nach einer Ausführungsform umfasst die Schritte:

- Herstellen eines silikatischen Grünglases durch einen Schmelzprozess und eine anschließende Heißformgebung
- Temperaturbehandlung des silikatischen Grünglases, wobei mindestens ein Keimbildungsschritt im Temperaturbereich von 690°C-850°C für eine Dauer von 5 Minuten bis 8 Stunden, bevorzugt 30 Minuten bis 2 Stunden und mindestens ein Keramisierungsschritt im Temperaturbereich von 780°C-1100°C für eine Dauer von 3 Minuten bis 60 Stunden bevorzugt 3 Minuten bis 8 Stunden, durchgeführt werden,
- Durchführen wenigstens eines Ionenaustauschs in einem Tauschbad mit einer Zusammensetzung von 100 Gew.-% bis 0 Gew.-% $KNO_3$ und 0 Gew.-% bis 100 Gew.- % $NaNO_3$ und 0 Gew.-% bis 5 Gew.-% $LiNO_3$ bei einer Temperatur des Tauschbads zwischen 370°C und 500°C und einer Dauer zwischen 2 Stunden und 50 Stunden.

Allgemein ist es möglich, einen oder mehrere weitere Tauschschritte durchzuführen, beispielsweise in einem weiteren Schritt mit einem Tauschbad mit einer Zusammensetzung zwischen 90 Gew.-% $KNO_3$ und 10 Gew.-% $NaNO_3$ bis zu 100 Gew.-% $KNO_3$ oder zwischen 95 Gew.-% $NaNO_3$ und 5 Gew.-% $LiNO_3$ bis zu 99 Gew.-% $NaNO_3$ und 1 Gew.-% $LiNO_3$ bei Temperaturen zwischen 370°C und 500°C und einer Dauer zwischen einer Stunde und bis zu 10 Stunden.

Die Messung der Kenngrößen der chemischen Vorspannung, CS 0 (Druckspannung an der Oberfläche der Deckscheibe), CS 30 (Druckspannung bzw. allgemein Spannung in einer Tiefe von 30 $\mu$m sowie DoCL (Tiefe der Druckspannungslage, teilweise auch Austauschtiefe genannt), kann mittels geeigneter Messgeräte, beispielsweise dem Messgerät SLP-1000 und dem FSM 6000, bestimmt werden. Die DoCL ist allerdings nicht identisch mit der Tiefe des Ionenaustauschs.

Die vorliegende Offenbarung betrifft allgemein daher auch eine Deckscheibe, hergestellt oder herstellbar in einem Verfahren nach einer Ausführungsform.

Weiterhin betrifft die vorliegende Offenbarung die Verwendung einer Deckscheibe nach einer Ausführungsform und oder hergestellt in einem Verfahren nach einer Ausführungsform in elektronischen Geräten, insbesondere in elektronischen Anzeigegeräten, insbesondere in mobilen elektronischen Anzeigegeräten, beispielsweise in mobile touch panels und/oder mobilen digitalen Anzeigegeräten wie Smartphones oder Smartwatches und allgemein Touchpanels. Weiterhin betrifft die vorliegende Offenbarung auch ein Anzeigegerät, insbesondere ein digitales Anzeigegerät, wie ein touch panel oder eine Smartwatch oder ein Smartphone umfassend eine Deckscheibe nach Ausführungsformen und/oder hergestellt in einem Verfahren nach Ausführungsformen.

Unter einem Tauschbad wird eine Salzschmelze verstanden, wobei diese Salzschmelze in einem Ionenaustauschverfahren für ein Glas oder einen Glasartikel zum Einsatz kommt. Im Rahmen der vorliegenden Offenbarung werden die Begriffe des Tauschbads und des Ionenaustauschbads synonym verwendet.

In der Regel werden für Tauschbäder Salze in technischer Reinheit verwendet. Dies bedeutet, dass trotz der Verwendung von beispielsweise lediglich Natriumnitrat als Ausgangsstoff für ein Tauschbad noch gewisse Verunreinigungen vom Tauschbad umfasst sind. Das Tauschbad ist dabei eine Schmelze eines Salzes, beispielsweise also von Natriumnitrat, oder eines Gemischs von Salzen, beispielsweise ein Gemisch von einem Natrium- und einem Kaliumsalz. Dabei wird die Zusammensetzung des Tauschbades in der Form angegeben, dass sie sich auf die nominelle Zusammensetzung des Tauschbades ohne Berücksichtigung von eventuell vorhandenen Verunreinigungen bezieht. Sofern daher im Rahmen der vorliegenden Offenbarung von einer 100%igen Natriumnitratschmelze gesprochen wird, bedeutet dies also, dass als Rohstoff lediglich Natriumnitrat verwendet wurde. Der tatsächliche Gehalt des Tauschbades an Natriumnitrat kann jedoch davon abweichen und wird dies in der Regel auch, da insbesondere technische Rohstoffe einen gewissen Anteil an Verunreinigungen aufweisen. Dieser liegt jedoch in der Regel bei weniger als 5 Gew.-%, bezogen auf das Gesamtgewicht des Tauschbads, insbesondere bei weniger als 1 Gew.-%.

In entsprechender Weise werden bei Tauschbädern, welche ein Gemisch verschiedener Salze aufweisen, die nominellen Gehalte dieser Salze ohne Berücksichtigung von technische bedingten Verunreinigungen der Ausgangsstoffe angegeben. Ein Tauschbad mit 90 Gew.-% $KNO_3$ und 10 Gew.-% $NaNO_3$ kann also ebenfalls noch geringe Verunreinigungen aufweisen, welche jedoch durch die Rohstoffe bedingt sind und in der Regel bei weniger als 5 Gew.-%, bezogen auf das Gesamtgewicht des Tauschbads, insbesondere bei weniger als 1 Gew.-%, liegen sollten.

Weiterhin ändert sich die Zusammensetzung des Tauschbades auch im Laufes des Ionenaustausches, da durch den fortgesetzten Ionenaustausch insbesondere Lithiumionen aus dem Glas bzw. dem Glasartikel in das Tauschbad migrieren. Eine solche Änderung der Zusammensetzung des Tauschbades durch Alterung wird vorliegend allerdings ebenfalls, sofern nicht ausdrücklich anders angegeben, nicht berücksichtigt. Vielmehr wird im Rahmen der vorliegenden Offenbarung bei der Angabe der Zusammensetzung eines Tauschbads auf die nominelle ursprüngliche Zusammensetzung abgestellt.

<u>Beispiele</u>

Im Folgenden wird die Erfindung anhand von Beispielen näher erläutert.

Die Zusammensetzungen erfindungsgemäßer glaskeramischer Materialien finden sich in Tabelle 1.

Die in Tabelle 1 aufgeführten Materialien wurden unter Verwendung von in der Glasindustrie üblichen Rohstoffen bei Temperaturen von ca. 1600 bis 1680°C erschmolzen und geläutert. Das Aufschmelzen des Gemenges erfolgte dabei zunächst in Tiegeln aus gesintertem Kieselglas und wurde dann in Pt/Rh-Tiegel mit Innentiegeln aus Kieselglas umgegossen und bei Temperaturen von ca. 1550°C für 30 Minuten durch Rühren homogenisiert. Nach Abstehen bei 1640°C für 2 h wurden Gussstücke von ca. 140mmx100mmx30mm Größe gegossen und in einem Kühlofen bei ca. 620 bis 680°C entspannt und auf Raumtemperatur abgekühlt. Aus den Gussstücken wurden die Prüfmuster für die Messung der Eigenschaften im glasigen Zustand und für die Keramisierungen präpariert.

Für die Keramisierungen wurden in der Regel zweistufige Programme verwendet, die in Tabelle 1 angegeben sind. Hierbei werden die Ausgangsgläser von Raumtemperatur zunächst auf eine Keimbildungstemperatur oberhalb von $T_g$ erhitzt und dort eine für die Keimbildung ausreichende Zeit gehalten. Anschließend werden die Proben auf die Keramisierungstemperatur erhitzt und dort ebenfalls gehalten. Auch drei- oder mehrstufige Programme können verwendet werden (Beispiel 2 in Tabelle 1). Haltezeiten können weiterhin durch langsame Heizraten ersetzt werden.

An den keramisierten Proben wurden mit Hilfe von XRD Kristallphasen und deren Gehalte sowie die Transmission im sichtbaren Bereich $\tau_{vis}$ (an Proben mit 0,7 mm Dicke) sowie die Farbwerte im Lab-System (Normlichtart C) bestimmt.

Die in Tabelle 1 angegebenen Kristallphasengehalte wurden mit Hilfe von Röntgenbeugungsmessungen an einem Panalytical X'Pert Pro Diffraktometer (Almelo, Niederlande) bestimmt. Als Röntgenstrahlung wurde eine über einen Ni-Filter erzeugte CuKa-Strahlung ($\lambda$ = 1.5060 Å) verwendet. Die Standard-Röntgenbeugungsmessungen an Pulver- als auch Festkörperproben wurden unter einer Bragg-Brentano Geometrie ($\theta$-2$\theta$) durchgeführt. Die Röntgenbeugungsdiagramme wurden zwischen 10° und 100° (2$\theta$-Winkel) gemessen. Die Quantifizierung der relativen kristallinen Phasenanteile, sowie die Bestimmung der Kristallitgrößen erfolgte über eine Rietveld-Analyse. Die Messung erfolgte an gemahlenem Probenmaterial, wodurch der Volumenanteil des Kernbereichs deutlich dominiert. Die gemessenen Phasenanteile entsprechen daher der Phasenverteilung im Kern der Glaskeramik. Die Proben mit "V" entsprechen Vergleichsbeispielen. Die lediglich nummerierten Beispiele sind Beispiele von Ausführungsformen.

Tabelle 1

| Beispiele | V1 | V2 | 1 | 2 | 3 |
|---|---|---|---|---|---|
| $Al_2O_3$ | 19,95 | 19,95 | 22,50 | 19,86 | 21,70 |
| $As_2O_3$ | 0,85 | 0,85 | | | |
| $B_2O_3$ | | | 0,20 | | |
| BaO | 0,84 | 0,84 | | 2,26 | 0,55 |
| CaO | | | 0,02 | 0,43 | 0,25 |
| Cl | | | | | |
| $Fe_2O_3$ | | | | 0,012 | 0,015 |
| $HfO_2$ | | | | | |
| $K_2O$ | 0,19 | 0,19 | 0,20 | 0,27 | 0,32 |
| $Li_2O$ | 3,67 | 3,67 | 4,40 | 3,95 | 3,64 |
| MgO | 1,07 | 1,07 | 1,02 | 0,27 | 0,32 |
| $Na_2O$ | 0,15 | 0,15 | 0,65 | 0,61 | 0,15 |
| $Nd_2O_3$ | 0,06 | 0,06 | 0,24 | | 0,05 |
| $P_2O_5$ | | | 0,20 | | 0,03 |
| $Sb_2O_3$ | | | | | |
| $SiO_2$ | 67,31 | 67,31 | 65,50 | 66,64 | 66,40 |
| $SnO_2$ | | | 0,54 | 0,12 | 0,07 |
| SrO | | | | | 0,50 |
| $TiO_2$ | 2,29 | 2,29 | 1,60 | 2,20 | 2,20 |
| $V_2O_5$ | | | | | |
| ZnO | 1,70 | 1,70 | 0,44 | 1,50 | 1,94 |
| $ZrO_2$ | 1,76 | 1,76 | 1,95 | 1,90 | 1,85 |
| NaCl | | | 0,12 | | |
| SUMME | 99,84 | 99,84 | 99,58 | 100,02 | 99,99 |

| Beispiele | V1 | V2 | 1 | 2 | 3 |
|---|---|---|---|---|---|
| $SnO_2/(TiO_2+ZrO_2)$ | 0,00 | 0,00 | 0,15 | 0,03 | 0,02 |
| Dichte [g/cm³] | | 2,512 | | | |
| Keramisierung | 760°C/30 min.+ 900°C/10 min. | 760°C/30 min.+ 990°C/5 min. | 760°C/60 min. + 990°C/8 min. | 795°C/60 min. + 930°C/60 min. +975°C/5 min. | 760°C/60 min. + 1000°C/12 min |
| Hauptkristallphasen | HQMK | KMK | KMK | KMK | KMK + HQMK |
| relativer Anteil KMK | n.b. | n.b. | 96 | 96 | 86 |
| $\tau_{vis}$ (C/2) 0,7mm | 90,3 | 76,6 | 80,2 | 87,6 | 84,9 |
| YI (Norm.L. C Yellow.) | 1,7 | | | | |
| L* | 96,13 | 90,1 | 91,8 | 95 | 94,1 |
| a* | -0,14 | -0,1 | -1,2 | -0,1 | 1,2 |
| b* | 0,77 | 8,6 | 9,1 | 1,5 | 4,4 |
| C* | 0,78 | 8,6 | 9,2 | 1,5 | 4,6 |

Tabelle 1 (fortgesetzt)

| Beispiele | V3 | V4 | 4 | 5 | 6 |
|---|---|---|---|---|---|
| $Al_2O_3$ | 20,50 | 21,98 | 22,02 | 19,35 | 19,35 |
| $As_2O_3$ | | | | | |
| BaO | 1,92 | | 1,23 | | |
| CaO | | 0,02 | 0,02 | 0,03 | 0,20 |
| $Fe_2O_3$ | 0,014 | 0,008 | 0,008 | 0,018 | 0,010 |
| $HfO_2$ | | | | | |

| Beispiele | V3 | V4 | 4 | 5 | 6 |
|---|---|---|---|---|---|
| $K_2O$ | | | | | 0,50 |
| $Li_2O$ | 3,20 | 3,59 | 3,68 | 4,25 | 4,50 |
| MgO | 0,10 | 0,75 | 1,20 | 1,26 | 0,50 |
| $Na_2O$ | 0,52 | 0,38 | 0,39 | 0,06 | 0,50 |
| $P_2O_5$ | | 1,37 | 1,36 | | |
| $SiO_2$ | 67,40 | 67,70 | 65,90 | 70,90 | 68,50 |
| $SnO_2$ | 0,07 | 1,22 | 1,24 | 1,59 | 1,50 |
| SrO | | | 0,01 | | 0,50 |
| $TiO_2$ | 2,31 | 0,01 | 0,01 | 0,02 | |
| ZnO | 1,42 | | | | 1,50 |
| $ZrO_2$ | 1,80 | 2,92 | 2,93 | 2,44 | 2,50 |
| SUMME | 99,25 | 99,94 | 100,00 | 99,92 | 100,06 |
| $SnO_2/(TiO_2+ZrO_2)$ | 0,02 | 0,42 | 0,42 | 0,65 | 0,60 |
| $T_g$ | 701 | | 725 | | 700°C |
| Keramisierung | 760°C/60 min. + 1000°C/12 min | 760°C/60 min. + 1000°C/12 min | 760°C/60 min. + 980°C/8min | 760°C/60 min. + 990°C/12 min. | 740°C/3h+ 830°C/10 min |
| Hauptkristallphasen | HQMK | HQMK | KMK | KMK | KMK |
| relativer Anteil KMK | - | - | 97,4 | 94,5 | 98,2 |
| Kristallitgröße KMK (nm) | n.b. | n.b. | 68 | 69 | 69 |
| Transmission D=0,8mm | n.b. | n.b. | n.b. | n.b. | n.b. |
| $\tau_{vis}$ (C/2) 0,7mm | 88,9 | 83,4 | 80,6 | 90 | 82,5 / 4mm |
| YI (Norm.L. C Yellow.) | | | | | |
| Normlichtart C | | | | | |
| L* | 95,5 | 93,2 | 91,9 | 96 | 92,8 |

| Beispiele | V3 | V4 | 4 | 5 | 6 |
|---|---|---|---|---|---|
| a* | -0,3 | -0,1 | 0,4 | -0,1 | -0,7 |
| b* | 2,4 | 5,6 | 3,2 | 1,2 | 6,1 |
| C* | 2,4 | 5,6 | 3,2 | 1,2 | 6,2 |

Tabelle 1 (fortgesetzt

| Beispiele | 7 | 8 | 9 |
|---|---|---|---|
| $Al_2O_3$ | 19,35 | 26,20 | 30,71 |
| $As_2O_3$ | | | 0,50 |
| BaO | | | |
| CaO | 0,20 | 2,44 | |
| $Fe_2O_3$ | 0,010 | | |
| $HfO_2$ | | 0,10 | |
| $K_2O$ | 0,50 | | 6,13 |
| $Li_2O$ | 4,50 | 4,32 | |
| MgO | 0,50 | 0,25 | |
| $Na_2O$ | 0,50 | 0,51 | 12,36 |
| $P_2O_5$ | | | |
| $SiO_2$ | 68,50 | 59,20 | 41,25 |
| $SnO_2$ | 1,50 | 0,47 | |
| SrO | 0,50 | | |
| $TiO_2$ | | | 7,37 |
| ZnO | 1,50 | 1,81 | |
| $ZrO_2$ | 2,50 | 4,16 | 1,67 |
| SUMME | 100,06 | 99,46 | 100,00 |
| $SnO_2/(TiO_2+ZrO_2)$ | 0,60 | 0,11 | 0,00 |
| $T_g$ | 700°C | | |
| Keramisierung | 740°C/3h+ 850°C/30 min | 760°C/60 min.+ 980°C/8min. | 850°C/4h + 900°C/30 min. |

| Beispiele | 7 | 8 | 9 |
|---|---|---|---|
| Hauptkristallphasen | KMK | KMK | Nephelin, Rutil (tr) |
| relativer Anteil KMK | 98,3 | 96,5 | - |
| Kristallitgröße KMK (nm) | 72 | 81 | Nephelin = 62nm |
| Transmission D=0,8mm | n.b. | | |
| $\tau_{vis}$ (C/2) 0,7mm | 90,2 | 82,8 | 82,2 |
| YI (Norm.L. C Yellow.) | | | |
| Normlichtart C | | | |
| L* | 96,1 | 92,9 | 92,7 |
| a* | -0,2 | 0,1 | -1,3 |
| b* | 1,2 | 2,9 | 8,5 |
| C* | 1,2 | 2,9 | 8,6 |

Für Vorspannversuche wurden keramisierte Glaskeramikscheiben mit einer Dicke von 0,7 mm in verschiedenen Salzbädern vorgespannt. Tabelle 2 zeigt die Veränderung der kristallographischen Daten beim Vorspannen einer erfindungsgemäßen Glaskeramik.

Tabelle 2

| | a (Å) | C (Å) | V (Å$^3$) | ΔV |
|---|---|---|---|---|
| Literaturwert $Li_{0.75}Al_{0.75}Si_{2.25}O_6$ | 7,505 | 9,070 | 510,91 | |
| nicht vorgespannt | 7,499 | 9,099 | 511,64 | 0 |
| 100 % $KNO_3$ | 7,501 | 9,199 | 517,56 | 1,16% |
| | 7,443 | 9,687 | 536,59 | 4,88% |
| 80 % $KNO_3$ + 20 %$NaNO_3$ + 100 %$KNO_3$ | 7,499 | 9,261 | 520,76 | 1,78% |
| 99 % $KNO_3$ + 1 %$NaNO_3$ | 7,497 | 9,275 | 521,35 | 1,90% |
| 95 % $KNO_3$ + 5 %$NaNO_3$ | 7,502 | 9,295 | 523,09 | 2,24% |
| 90 % $KNO_3$ + 10 %$NaNO_3$ | 7,503 | 9,303 | 523,77 | 2,37% |
| (Literaturwert ICDD-PDF# 00-035-0794) | | | | |

Die Probe enthält nach der Keramisierung Keatit-Mischkristalle als Hauptkristallphase (96 % Keatit Mischkristall, 3 % $ZrTiO_4$). Nach dem Vorspannen (bei Temperaturen von 420-440°C für 7,5-18 h) zeigten alle Proben unabhängig vom gewählten Salzbad eine Vergrößerung der Elementarzelle in der oberflächennahen Schicht von mehr als 1 % gegenüber der nicht vorgespannten Probe. Die Probe, die in 100 % $KNO_3$ vorgespannt wurde, zeigte in der oberflächennahen Schicht sogar die Bildung von zwei verschiedenen Keatit-Mischkristallstrukturen, die beide gegenüber dem nicht-vorgespannten Keatit ein größeres Elementarzellenvolumen aufweisen. Alle Proben zeigten zudem die eine Steigerung der Festigkeit mit DoCL Werten von 102 µm (100 % $KNO_3$)-154 µm (80 % $KNO_3$/20 % $NaNO_3$). Die Werte für CS 30 lagen zwischen 195 MPa und 360 MPa.

Proben mit einer Zusammensetzung gemäß Beispiel 9 wurden in analoger Weise hergestellt, wie in Tabelle 1 Bsp. 9 angegeben keramisiert und vorgespannt. Sie enthalten als Hauptkristallphase Nephelin ((Na,K)[$AlSiO_4$]) sowie Spuren von Rutil. Eine XRD Messung ergab für den Nephelin (hexagonale Struktur) folgende kristallographische Daten a=10.026 (5) Å, c=8.372(5) Å, Volumen der Elementarzelle: V=728.8(10) $Å^3$. Nach dem Vorspannen (100%$KNO_3$, 8h bei 500°C) ergab der Kalsilit (Kalium-substituiertes Endglied der Nephelin-Mischkristallreihe, $KAlSiO_4$): a=5.170(5) Å, c=8.730(5) Å. Zum direkten Vergleich muss hier aufgrund der unterschiedlichen Größe der Elementarzelle beider Strukturen die a-Gitterkonstante verdoppelt werden (damit dieselbe Anzahl an Formeleinheiten in der Elementarzelle ist). Damit ergibt sich für den Kalsilit ein Elementarzellvolumen von V=808.3(10) $Å^3$, was einer Vergrößerung von ca. 10 % entspricht.

Vorspannbedingungen und damit erzielte Vorspannparameter sind für unterschiedliche Deckscheiben in der nachfolgenden Tabelle aufgeführt.

| **Probe** | **Ionenaustausch** | | **gemessen mit** | **CS 0** | **CS 30** | **DoCL** | **CT** |
|---|---|---|---|---|---|---|---|
| | **Schritt 1** | **Schritt 2** | | **[MPa]** | **[MPa]** | **[µm]** | **[MPa]** |
| V5 | 7,5h 420°C 80/20% K/Na | 4h 405°C 100%K | SLP 1000 **FSM 6000** | **842** | 179 | 150 | 110 |
| V6 | 10h 400°C 80/20% K/Na | | SLP 1000 | 294 | 225 | 143 | 148 |
| 10 | 7,5h 440°C 100% Na | | SLP 1000 | 552 | 363 | 112 | 147 |
| 11 | 7,5h 440°C 99,5/0,5% K/Na | | SLP 1000 | 341 | 219 | 108 | 81 |
| 12 | 7,5h 440°C 100% Na | | SLP 1000 | 506 | 300 | 107 | 149 |
| 13 | 7,5h 420°C 80/20% K/Na | 4h 405°C 100%K | SLP 1000 | 360 | 252 | 121 | 119 |
| 14 | 12h 440°C 80/20 K/Na | | SLP 1000 | 438 | 335 | 145 | 217 |
| 15 | 7,5h 490°C 100% K | | SLP1000 **FSM 6000** | **987** | 27 | **28,1**/34 | 35 |
| 16 | 7,5h 440°C 100% K | | **FSM 6000** | **1088** | nd | **11** | **29** |
| 17 | 7,5h 440°C 99/1% | | SLP 1000 | 341 | 240 | 121 | 118 |

(fortgesetzt)

| Probe | Ionenaustausch | | gemessen mit | CS 0 | CS 30 | DoCL | CT |
|---|---|---|---|---|---|---|---|
| | Schritt 1 | Schritt 2 | | [MPa] | [MPa] | [μm] | [MPa] |
| | Na/Li | | | | | | |

CT steht hierbei für center tension, zentrale Spannung, und ist in MPa angegeben.

Beschreibung der Zeichnungen

Fig. 1 zeigt die schematische und nicht maßstabsgetreue Darstellung einer Deckscheibe 1 nach Ausführungsformen der vorliegenden Offenbarung. Die Deckscheibe 1 ist vorliegend scheibenförmig oder plattenförmig in dem Sinne ausgebildet, dass ihre Dicke d (in Fig. 1 nicht bezeichnet) wenigstens eine Größenordnung kleiner ist als Länge l und Breite b der Deckscheibe 1. Die Deckscheibe 1 kann, wie dies beispielhaft in Fig. 1 dargestellt ist, eben bzw. plan vorliegen oder als gewölbte oder gebogene Scheibe. Denkbar sind allgemein auch Ausführungsformen, bei welchen die Deckscheibe lediglich im Randbereich eine kleine Krümmung aufweist. Die beiden Abmessungen Länge und Breite bestimmen die beiden Hauptflächen oder Seiten (teilweise auch "Oberflächen" genannt) der Deckscheibe 1.

Fig. 2 zeigt eine schematische und nicht maßstabsgetreue Schnittdarstellung eines einer Deckscheibe 1 nach Ausführungsformen dieser Offenbarung. Die Deckscheibe 1 weist zwei Seiten 10, 12 auf (diese Seiten können auch als "Oberflächen" oder "Hauptflächen" der Deckscheibe 1 bezeichnet werden), wobei die Seite 10 hier als Oberseite, die Seite 12 als Unterseite ausgebildet ist. Weiterhin ist die Dicke d der Deckscheibe 1 bezeichnet. Die Deckscheibe 1 weist eine zwischen den beiden Seiten 10, 12 angeordnete Schicht 101 auf, welche im Rahmen der vorliegenden Offenbarung auch als "oberflächennahe Schicht" bezeichnet wird. Die oberflächennahe Schicht 101 ist auf beiden Seiten der Deckscheibe 1 ausgebildet und kann gleich ausgebildet sein, also beispielsweise eine im Rahmen der Messgenauigkeit gleiche Dicke aufweisen. Es ist aber auch möglich und kann sogar bevorzugt sein, dass die Dicke der oberflächennahen Schicht 101, welche einer der beiden Seiten, beispielsweise der Seite 10 zugeordnet ist, eine andere Dicke aufweist als die oberflächennahe Schicht, welche der Seite 12 zugeordnet ist. Dies kann beispielsweise dann der Fall sein, wenn die chemische Vorspannung der Deckscheibe 1 so ausgeführt wurde, dass ein ungleicher Austausch erfolgt.

Zwischen den beiden oberflächennahen Schichten 101 liegt der Kern 102. Zwischen der oberflächennahen Schicht 101 und dem Kern 102 kann sich ein weiterer Bereich anschließen, welcher allerdings in Fig. 2 nicht bezeichnet ist, in welchem es zu einem Ionenaustausch gekommen ist, aber beispielsweise nichts zur Druckspannung beiträgt. Der Kern ist allgemein der Bereich minimaler Spannung der Deckscheibe 1. Die oberflächennahen Schichten 101 weisen demgegenüber eine höhere Spannung auf, insbesondere können sie unter Druckspannung stehen. Die Deckscheibe 1 umfasst allgemein eine silikatische Glaskeramik, wobei die Deckscheibe 1 allgemein eine Dicke d zwischen 0,4 mm und 0,85 mm aufweist. Der Lichttransmissionsgrad, $\tau_{vis}$, der Deckscheibe 1 beträgt mehr als 80%, bevorzugt mehr als 85%, im Bereich von 380 nm bis 780 nm, vorzugsweise bestimmt für Dicken zwischen 0,4 mm und 0,85 mm, insbesondere vorzugsweise bei einer Dicke von 0,7 mm. Die Deckscheibe 1 liegt, durch eine chemische Vorspannung, die dazu führt, dass wenigstens in einer oberflächennahen Schicht 101 bzw. in den beiden oberflächennahen Schichten 101, insbesondere in einer Schicht von 20 μm bis 70 μm, bestimmt in einem rechten Winkel von einer der Seitenflächen 10, 12 der Deckscheibe 1 aus, eine von der Deckscheibe 1 bzw. der von dieser umfassten Glaskeramik umfasste Kristallphase vorzugsweise gemittelt nach dem Vorspannprozess ein Volumen der Elementarzelle aufweist, das mindestens 1 Vol.-%, bevorzugt mindestens 2 Vol.-% größer ist als das der Kristallphase im Kern 102. Vorzugsweise kann es sich bei der Kristallphase, welche von der Glaskeramik der Deckscheibe 1 umfasst ist, um eine silikatische Kristallphase handeln. Durch die chemische Vorspannung weist die Deckscheibe 1 eine CS von wenigstens 250 MPa und vorzugsweise höchstens 1500 MPa und/oder eine CS30 von wenigstens 160 MPa und vorzugsweise höchstens 525 MPa und/oder eine DoCL, bezogen auf die Deckscheibe 1, von wenigstens dem 0,2-fachen der Dicke d der Deckscheibe 1 und vorzugsweise weniger als dem 0,5 -fachen der Dicke d der Deckscheibe 1 auf.

Fig. 3 bis 6 betreffen die Durchführung des sogenannten Set-Drop-Fests zur Bestimmung der Set-Drop-Festigkeit.

Der Set-Drop-Test wird dabei vorzugsweise wie folgt durchgeführt:

Eine Deckscheibe wird auf einer Probenaufnahme fixiert und aus kumulierenden Fallhöhen auf einen definierten Untergrund fallen gelassen. Eine Übersicht des Gesamtaufbaus ist in Figur 3 dargestellt. Die in der Fig. 5 im Set-Drop-Test verwendete Deckscheibe weist eine Länge von 99 mm und eine Breite von 59 mm auf und wird wie in Figur 4 dargestellt, magnetisch mit einem Probendummy in der Probenaufnahme fixiert. Für die in der vorliegenden Offenbarung geschilderten Untersuchungen wurden abweichend von der Probendarstellung in Fig. 4 allerdings Formate der Deckscheibe von 49,5 mm mal 49,5 mm verwendet, wobei der prinzipielle Aufbau der Testdurchführung in Fig. 3 bis 6 davon unbenommen ist.

Zunächst wird dabei eine Kunststoffplatte mit Hilfe eines doppelseitigen Klebebandes in ein Metallgehäuse, welches Form und Gewicht einer Halterung für ein mobiles Endgerät, beispielsweise ein Smartphone, hat, geklebt. Es eignen sich hierbei beispielsweise Kunststoffplatten mit Dicken zwischen 4,35 mm und bis 4,6 mm (siehe Figur 5). Das Einkleben erfolgt bevorzugt mittels eines doppelseitigen Klebebandes, welches eine Dicke von etwa 100 $\mu$m aufweist. Auf die Kunststoffplatte wird dann mittels eines doppelseitigen Klebebandes, vorzugsweise eines doppelseitigen Klebebandes mit der Dicke 295 $\mu$m, insbesondere ein doppelseitiges Klebeband der Marke tesa®, Produktnummer 05338, der zu testende scheibenförmige Glasartikel so aufgeklebt, dass zwischen der Oberkante des Gehäuses bzw. der Halterung und der Oberkante des Glasartikels ein Abstand zwischen 350 $\mu$m und 450 $\mu$m erhalten wird. Die Deckscheibe liegt höher als der Rahmen des Gehäuses und es darf kein direkter Kontakt zwischen Deckscheibe und Aluminiumgehäuse auftreten. Das so erhaltene "Set" mit einem Gewicht von 177,5 g, welches den Einbau einer Deckscheibe in ein mobiles Endgerät nachempfindet und eine Art "Dummy" für ein reales mobiles Endgerät, hier insbesondere ein Smartphone, ist, wird anschließend auf eine Fläche der Größe DIN A4, die sogenannte Aufprallfläche, mit der Glasseite mit einer Anfangsgeschwindigkeit in vertikaler Richtung, somit Fallrichtung von Null nach unten fallen gelassen. Die Aufprallfläche wird dabei wie folgt hergestellt: Sandpapier mit einer entsprechenden Körnung, beispielsweise der Körnung 60 (#60), wird mittels eines doppelseitigen Klebebandes, beispielsweise eines Klebebandes der Dicke 100 $\mu$m auf eine Bodenplatte geklebt. Als Klebeband wurde Tesa (10m/15mm), transparent, doppelseitig, Produktnummer 05338, genutzt Die Körnung ist im Rahmen der vorliegenden Offenbarung definiert gemäß den Normen der Federation of European Producers of Abrasives (FEPA), Beispiele dafür siehe auch in DIN ISO 6344., insbesondere DIN ISO 6344-2:2000-04, Schleifmittel auf Unterlagen - Korngrößenanalyse - Teil 2: Bestimmung der Korngrößenverteilung der Makrokörnungen P 12 bis P 220 (ISO 6344-2:1998). Das Gewicht der Bodenplatte, die bei den vorliegend offenbarten Werten, eine Aluminiumunterlage ist, beläuft sich auf ca. 3 kg.

Die Bodenplatte muss fest sein und ist bevorzugt aus Aluminium oder alternativ auch aus Stahl ausgebildet. Das Sandpapier muss komplett mit Klebeband versehen und blasenfrei aufgeklebt sein. Die Aufprallfläche darf lediglich für fünf Fallversuche verwendet werden und ist nach dem fünften Fallversuch auszutauschen. Die Probe, also das erhaltene Set, wird in die Prüfvorrichtung eingesetzt und mittels einer 2D-Wasserwaage (Dosenlibelle) so ausgerichtet, dass das Set horizontal gelagert ist, wobei die Deckscheibe zum Boden, also in Richtung der Aufprallfläche, zeigt (siehe Figur 6). Die erste Fallhöhe beträgt 25 cm, danach erfolgt der Fall aus einer Höhe von 30 cm.

Sofern noch immer kein Bruch auftritt, wird nun die Fallhöhe in 10-cm-Schritten erhöht, bis Glasbruch eintritt. Die Bruchhöhe, der Bruchursprung sowie das Brucherscheinungsbild werden notiert. Der Test wird an 10 bis 15 Proben durchgeführt, und es wird ein Mittelwert gebildet.

Fig. 7 zeigt die Auswertung von EDX-Messungen an zwei unterschiedlichen Proben einer glaskeramischen Deckscheibe. Das glaskeramische Material der Deckscheibe war dabei identisch zusammengesetzt, wurde aber unterschiedlichen Vorspannprotokollen unterzogen.

Im oberen Diagramm wurde eine silikatische Glaskeramik in einem Tauschbad der Zusammensetzung 80 Gew.-% $KNO_3$ und 20 Gew.-% $NaNO_3$ bei 440°C für 18 Stunden chemisch vorgespannt. Nach der EDX-Auswertung ist erkennbar, dass der Natriumoxid-Gehalt an der Probenoberfläche etwa 8 Mol-% beträgt. Für den Bereich des Kerns oder des "Bulks" 102 kann man einen Gehalt von ca. 1 Mol-% $Na_2O$ annehmen. Dieser ist in der Fig. 7 oben als solcher auch gekennzeichnet. Mittels des genannten Vorspannens der Gehalt der Glaskeramik in der Deckscheibe kann zumindest in einem oberflächennahen Bereich 101 der Gehalt an $Na_2O$ deutlich gesteigert werden, teilweise um bis zu absolut 7 Mol-% oder - über die Dicke des oberflächennahen Bereichs 101 aus Fig. 2 vorzugsweise gemittelt - von bis zu absolut 6 mol-%.

Wie bereits weiter oben ausgeführt ist es hinsichtlich des größeren Kaliumions schwerer, zu einer solchen Erhöhung des Kaliumoxidgehalts zu kommen. Hier werden je nach genauer Ausgestaltung der Glaskeramik und/oder des Vorspannprotokolls Austauschtiefen von in der Spitze ca. 30 $\mu$m erzielt, wobei die Erfinder davon ausgehen, dass bei optimierten Prozessen und Materialien auch größere Austauschtiefen möglich sein sollten. Zwar ist der Kaliumaustausch schwieriger zu bewerkstelligen, ist aber gleichzeitig auch effizienter, sodass CS 0-Werte von beispielsweise bis zu 1500 MPa, beispielsweise 1200 MPa oder 1100 MPa möglich erscheinen. Bei anderen Vorspannprotokollen, wie beispielhaft eines im unteren Bereich von Fig. 7 abgebildet ist, wurde mit einer sehr hohen Kaliumkonzentration im Tauschbad gearbeitet. Die Zusammensetzung des Tauschbades war hier 99,5 Gew.-% $KNO_3$ und lediglich 0,5 Gew.-% $NaNO_3$. Die Temperatur des Tauschbades lag bei 420°C, die Dauer des Vorspannes betrug 7,5 Stunden. Hier kommt es, wie man der Darstellung im unteren Teil der Fig. 7 entnehmen kann, zu einer Erhöhung des $Na_2O$-Gehalts im oberflächennahen Bereich 101 der Deckscheibe, und zwar in der Spitze auf wenigstens 5 Mol-%, obwohl nur ein wehr geringer Gehalt an $NaNO_3$ im Tauschbad enthalten ist. Allerdings ist auch der $K_2O$-Gehalt nachweislich erhöht und beträgt in der Spitze bis etwa knapp 3 Mol-%. Im Kern 102 hingegen liegt ein deutlich geringerer Gehalt an $K_2O$ und $Na_2O$ vor, da hier nicht entsprechend ausgetauscht wurde.

Es wird darauf hingewiesen, dass zwischen dem Bereich 101 und dem Kern 102 ein Übergangsbereich liegt, in welchem ein Austausch stattgefunden hat, und zumindest teilweise auch eine Vergrößerung des Elementarzellenvolumens stattgefunden hat. Dieser "Zwischenbereich" ist ein Bereich, in welchem noch ein Ionenaustausch stattgefunden hat, jedoch nicht notwendig eine erhöhte Druckspannung stattgefunden haben muss.

Fig. 8 zeigt schließlich einen Vergleich der Set-Drop-Festigkeit unterschiedlicher Deckscheiben mit gleicher chemischer Zusammensetzung, aber unterschiedlichem Kristallphasengehalt bzw. unterschiedlicher Keramisierung. In der Spannungskurve ist mit 102 der Kern bezeichnet, der Bereich des Spannungsminimums in der Deckscheibe. Mit 2 bezeichnet sind hier die Ergebnisse, welche an Fallhöhen für ein Grünglas erhalten werden, welches chemisch vorgespannt vorliegt. Mit 3 bezeichnet sind Ergebnisse für eine Glaskeramik, welche eine Kristallphase umfasst - in diesem Fall Hochquarz-Mischkristall - welche keiner Vorspannung in die Kristallphase zugänglich ist. Die erzielte Festigkeit im Set-Drop-Test ist völlig unzureichend. Schließlich ist mit 4 bezeichnet das Ergebnis für eine Deckscheibe nach einer Ausführungsform, hier umfassend Keatit als Kristallphase. Die Ergebnisse des Set-Drop-Tests sind auch in der nachfolgenden Tabelle zusammengestellt. Die Fallhöhen sind jeweils in cm angegeben.

| | **Proben 2** | **Proben 3** | **Proben 4** |
|---|---|---|---|
| | 60 | 20 | 180 |
| | 70 | 20 | 150 |
| | 60 | 20 | 180 |
| | 100 | 20 | 140 |
| | 100 | 20 | 180 |
| | 60 | 20 | 180 |
| | 120 | 20 | 140 |
| | 110 | 20 | 170 |
| | 100 | 20 | 180 |
| | 50 | 20 | 140 |
| | 50 | 20 | 180 |
| | 60 | 20 | 160 |
| | 60 | | |
| **MW** | 77 | **20** | **165** |
| **Median** | **60** | **20** | **175** |
| **Min** | **50** | **20** | **140** |
| **Max** | **120** | **20** | **180** |

In Fig. 9 sind beispielhafte Vorspannprofile von Deckscheiben einander gegenübergestellt, nämlich ein Vorspannprofil einer Deckscheibe nach einer Ausführungsform einem Vorspannprofil für eine Deckscheibe umfassend ein Material gleicher chemischer Zusammensetzung, jedoch unkeramisiert. Vorspannprofil 5 entspricht dabei dem einer Deckscheibe nach einer Ausführungsform, Vorspannprofil 6 dem einer Deckscheibe umfassend ein Material gleicher chemischer Zusammensetzung, jedoch glasig ausgebildet und nicht keramisiert. Mit 102 ist der Kern gekennzeichnet, der Bereich, in welchem die Spannung einen minimalen Wert annimmt.

Bezugszeichenliste

| | |
|---|---|
| 1 | Deckscheibe |
| 10, 12 | Seiten der Deckscheibe |
| 101 | Oberflächennahe Schicht der Deckscheibe |
| 102 | Kern |
| d | Dicke der Deckscheibe |
| l | Länge der Deckscheibe |
| b | Breite der Deckscheibe |
| 2, 3, 4 | Ergebnisse von Set-Drop-Tests für unterschiedliche Probengesamtheiten |

5 Vorspannprofil nach Ausführungsform
6 Vorspannprofil eines Vergleichsbeispiels

## Patentansprüche

1. Deckscheibe mit einer Dicke zwischen 0,4 mm und 0,85 mm, umfassend eine silikatische Glaskeramik, wobei die Deckscheibe einen Lichttransmissionsgrad, $\tau_{vis}$, von mehr als 80%, bevorzugt mehr als 85%, im Bereich von 380 nm bis 780 nm, vorzugsweise bestimmt für Dicken von 0,4 mm bis 0,85 mm, insbesondere vorzugsweise bei einer Dicke von 0,7 mm, aufweist und chemisch vorgespannt vorliegt, aufweisend eine CS von wenigstens 250 MPa und vorzugsweise höchstens 1500 MPa und/oder eine CS30 von wenigstens 160 MPa und vorzugsweise höchstens 525 MPa und/oder eine DoCL, bezogen auf die Deckscheibe, von wenigstens dem 0,2-fachen der Dicke der Deckscheibe und vorzugsweise weniger als dem 0,5 -fachen der Dicke der Deckscheibe , wobei die silikatische Glaskeramik wenigstens eine silikatische Kristallphase umfasst, die in zumindest einer oberflächennahen Schicht, insbesondere in einer Schicht von 20 $\mu$m bis 70 $\mu$m, bestimmt in einem rechten Winkel von einer der Seitenflächen der Deckscheibe aus, vorzugsweise gemittelt nach dem Vorspannprozess ein Volumen der Elementarzelle aufweist, das mindestens 1 Vol.-%, bevorzugt mindestens 2 Vol.-% größer ist als das der Kristallphase im Kern, insbesondere in einem Bereich, in welchem Spannungen in der silikatischen Glaskeramik ein Minimum annehmen.

2. Deckscheibe nach Anspruch 1, wobei die Kristallphase zumindest in der oberflächennahen Schicht einen höheren Anteil an Natriumoxid $Na_2O$ und/oder Kaliumoxid $K_2O$ als im Kern, insbesondere in einem Bereich, in welchem Spannungen in der silikatischen Glaskeramik ein Minimum annehmen, umfasst.

3. Deckscheibe nach Anspruch 1 oder Anspruch 2, wobei die Glaskeramik der Deckscheibe mehr als 50 Vol.-% Kristallphase, vorzugsweise mehr als 70 Vol.-% Kristallphase umfasst, und bevorzugt höchstens 95 Vol-%.

4. Deckscheibe nach einem der Ansprüche 1 bis 3, **gekennzeichnet durch** einen Farbwert C* kleiner 4, bevorzugt kleiner 3.

5. Deckscheibe nach einem der Ansprüche 1 bis 4, **gekennzeichnet durch** einen Haze von 0,01 % bis 1 %, bezogen auf eine Dicke der Deckscheibe von 0,7 mm.

6. Deckscheibe nach einem der Ansprüche 1 bis 5, wobei die Glaskeramik als Lithium-Aluminium-Silikatglaskeramik ausgebildet ist und die Kristallphase als Keatit-Mischkristall.

7. Deckscheibe nach einem der Ansprüche 1 bis 6, wobei die Glaskeramik folgende Komponenten in Gew.-% auf Oxidbasis umfasst:

| | |
|---|---|
| $SiO_2$ | 55-75, bevorzugt 62-72 |
| $Al_2O_3$ | 18-27, bevorzugt 18-23 |
| $Li_2O$ | 2,8-5, bevorzugt 3-5. |

8. Deckscheibe nach einem der Ansprüche 1 bis 7, wobei die Glaskeramik folgende Komponenten in Gew.-% auf Oxidbasis umfasst:

| | |
|---|---|
| $SiO_2$ | 55-75, bevorzugt 62-72 |
| $Al_2O_3$ | 18-27 |
| $Li_2O$ | 2,8-5, bevorzugt 3-5 |
| $Na_2O$ | 0-4, bevorzugt 0-2 |
| $K_2O$ | 0-4, bevorzugt 0-2 |
| MgO | 0-8, bevorzugt 0-4 |
| CaO | 0-4, bevorzugt 0-2 |
| SrO | 0-4, bevorzugt 0-2 |
| BaO | 0-4, bevorzugt 0-2 |
| ZnO | 0-6, bevorzugt 0-2 |

(fortgesetzt)

| | |
|---|---|
| $TiO_2$ | 0-4, bevorzugt 0-3 |
| $ZrO_2$ | 0-5, bevorzugt 1,2-4 |
| $B_2O_3$ | 0-2, bevorzugt 0-0,1 |
| $Fe_2O_3$ | 0,0001 - 0,1, bevorzugt 0,0001 - 0,02 |
| $SnO_2$ | 0-2, bevorzugt 0,05-1,6 |

wobei vorzugsweise für die Summe der Komponenten $TiO_2$ und $ZrO_2$ gilt:
$0 < \Sigma (TiO_2+ZrO_2) < 9{,}5$ %, bevorzugt $1{,}2 < \Sigma (TiO_2+ZrO_2) < 9{,}5$ %.

**9.** Deckscheibe nach einem der Ansprüche 1 bis 8, **gekennzeichnet dadurch, dass** für die Komponenten $SnO_2$, $ZrO_2$ und $TiO_2$ gilt:
$0 \leq SnO_2/(ZrO_2+TiO_2) < 0{,}8$, bevorzugt $0{,}01 \leq SnO_2/(ZrO_2+TiO_2) < 0{,}7$.

**10.** Deckscheibe nach einem der Ansprüche 1 bis 9, **gekennzeichnet dadurch, dass** die sharp impact Festigkeit bestimmt in einem set-drop-Test, zwischen wenigstens 120 cm und bis zu 200 cm Fallhöhe.

**11.** Verfahren zur Herstellung einer Deckscheibe nach einem der Ansprüche 1 bis 10, umfassend die Schritte

- Herstellen eines silikatischen Grünglases durch einen Schmelzprozess und eine anschließende Heißformgebung
- Temperaturbehandlung des silikatischen Grünglases, wobei mindestens ein Keimbildungsschritt im Temperaturbereich von 690°C-850°C für eine Dauer von 5 min. bis 8 h, bevorzugt 30 min. bis 2 h und mindestens ein Keramisierungsschritt im Temperaturbereich von 780°C-1100°C für eine Dauer von 3 min. bis 60 h, bevorzugt 3 min. bis 8 h durchgeführt werden
- Durchführen wenigstens eines Ionenaustauschs in einem Tauschbad mit einer Zusammensetzung von 100 Gew.-% bis 0 Gew.-% $KNO_3$ und 0 Gew.-% bis 100 Gew.- % $NaNO_3$ und 0 Gew.-% -5Gew.-% $LiNO_3$ bei einer Temperatur des Tauschbads zwischen 370°C und 500°C und einer Dauer zwischen 2 Stunden und 50 Stunden.

**12.** Deckscheibe, vorzugsweise nach einem der Ansprüche 1 bis 10, hergestellt oder herstellbar in einem Verfahren nach Anspruch 11.

**13.** Verwendung einer Deckscheibe nach einem der Ansprüche 1 bis 10 und/oder nach Anspruch 12 in elektronischen Geräten, insbesondere in elektronischen Anzeigegeräten, insbesondere in mobilen elektronischen Anzeigegeräten, beispielsweise in mobile touch panels und/oder mobilen digitalen Anzeigegeräten wie Smartphones oder Smartwatches.

**14.** Anzeigegerät, insbesondere digitales Anzeigegerät, umfassend wenigstens eine Deckscheibe nach einem, der Ansprüche 1 bis 10 oder 12.

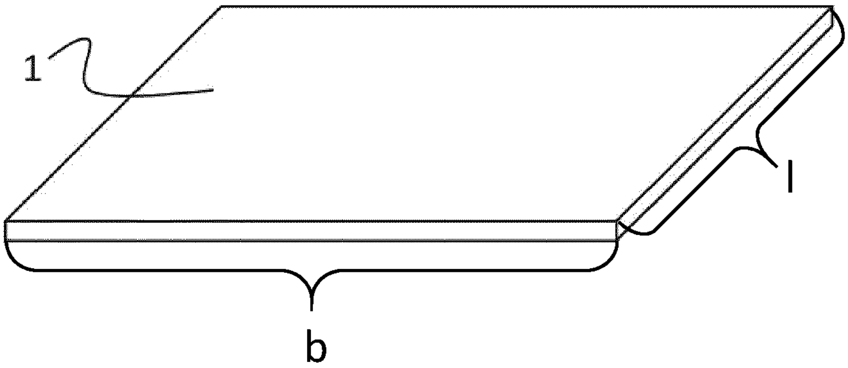


Fig. 1

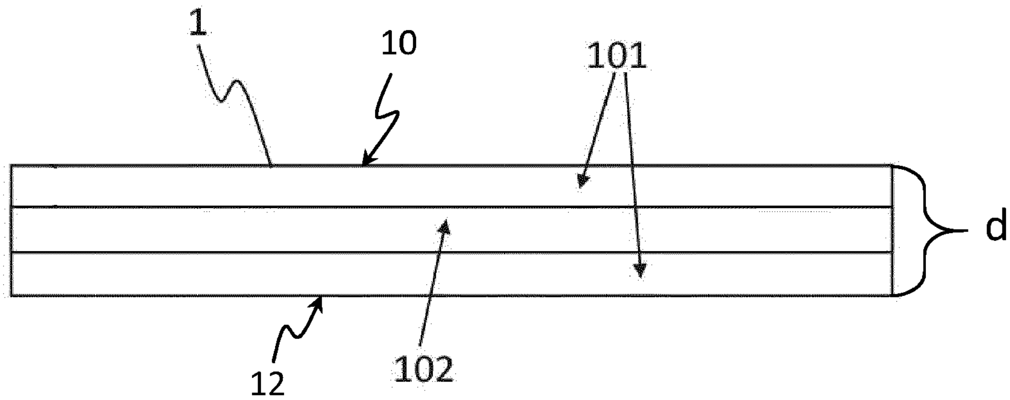


Fig. 2

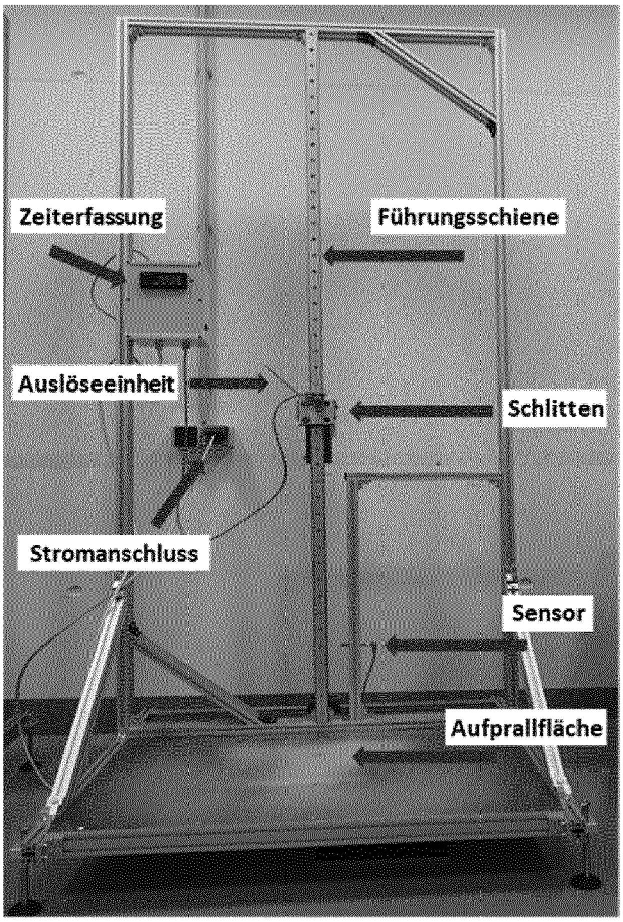


Fig. 3: Gesamtansicht des Set-Drop-Versuchsaufbaus mit Beschriftung der einzelnen Komponenten

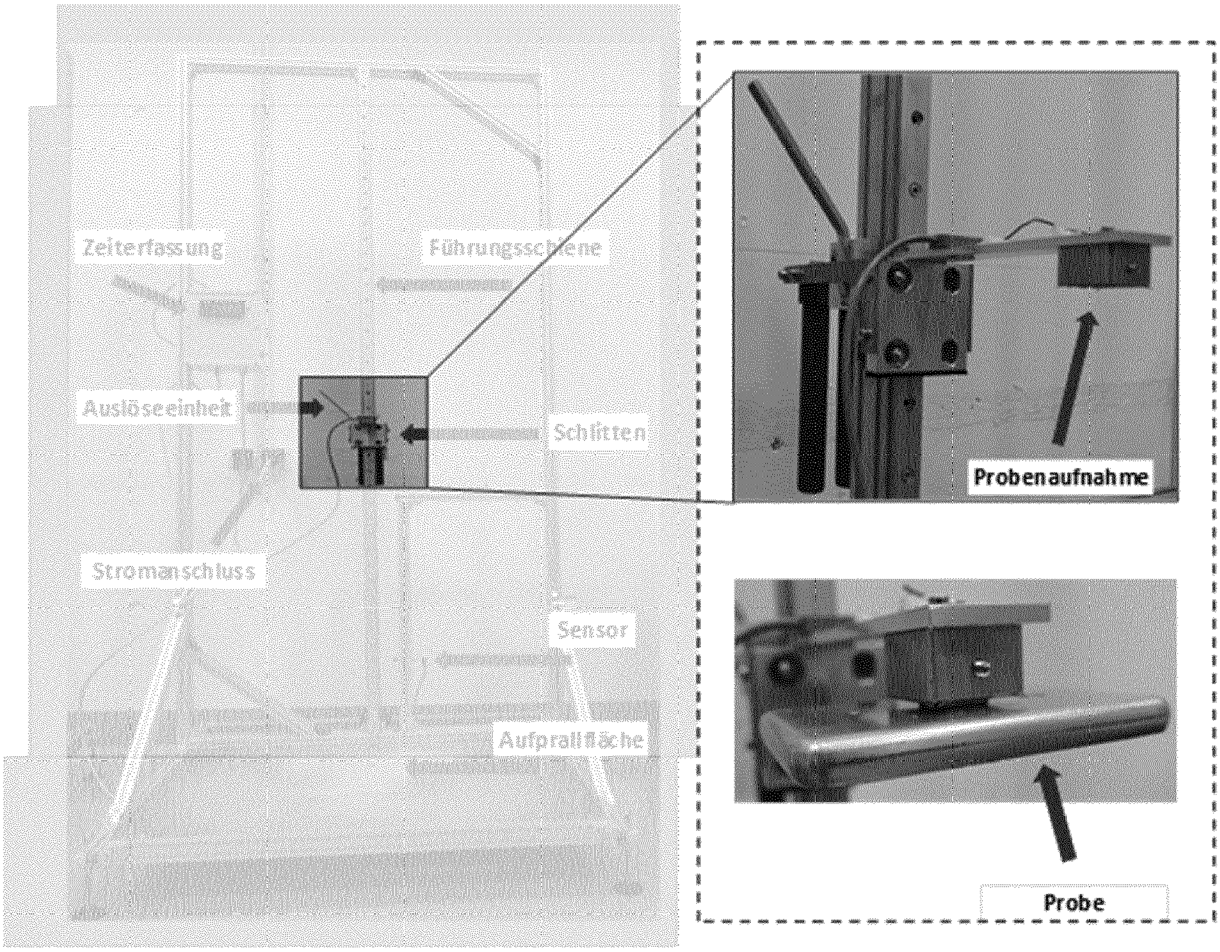


Fig. 4: Probenaufnahme und Auslösemechanismus des Set-Drop Versuchsaufbaus

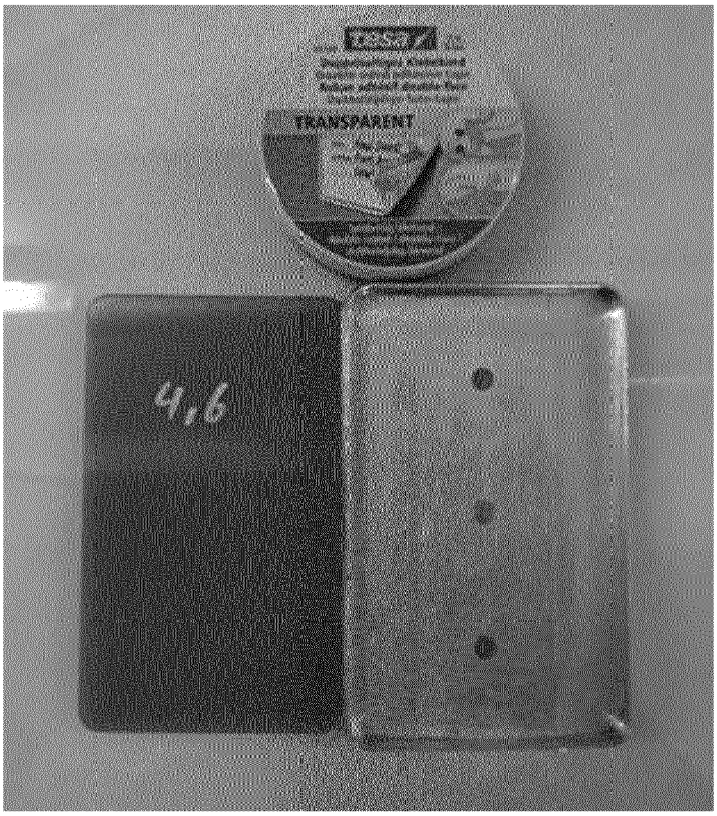


Fig. 5: Aluminiumgehäuse und Kunststoffplatte als Probenaufnahme und Probendummy

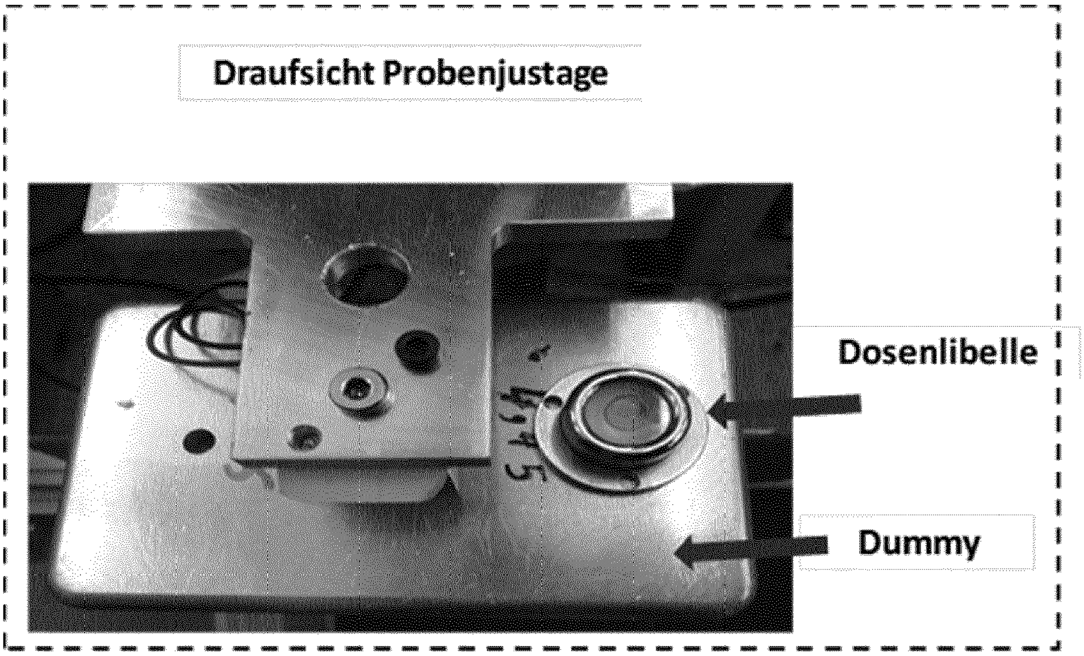


Fig. 6: Ausrichtung des Probendummys in der Probenaufnahme mittels 2D-Wasserwaage

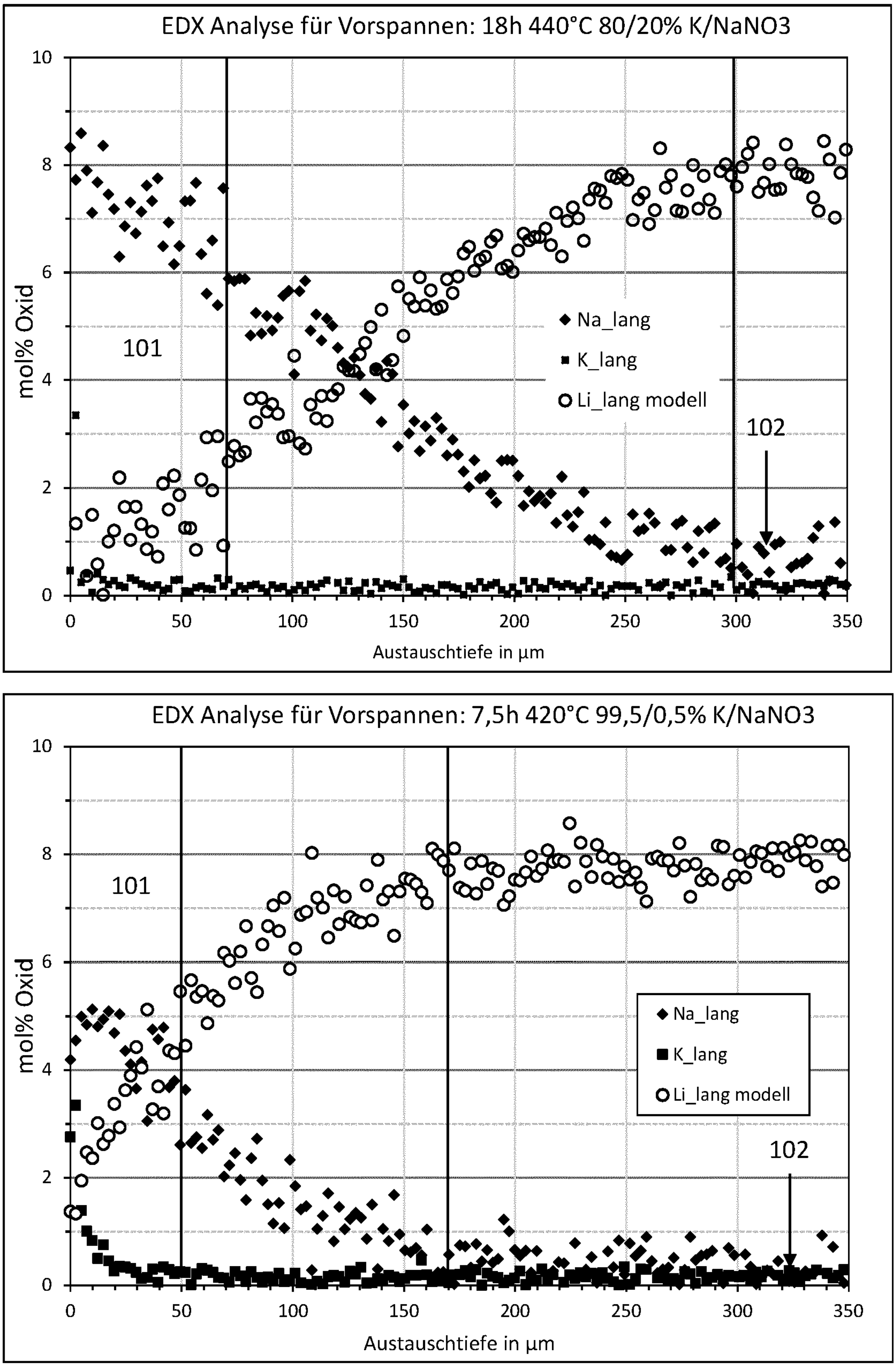
EDX Analyse für Vorspannen: 18h 440°C 80/20% K/NaNO3
mol% Oxid
Austauschtiefe in µm
Na_lang
K_lang
Li_lang modell
101
102
0
2
4
6
8
10
0
50
100
150
200
250
300
350
EDX Analyse für Vorspannen: 7,5h 420°C 99,5/0,5% K/NaNO3
mol% Oxid
Austauschtiefe in µm
Na_lang
K_lang
Li_lang modell
101
102

Fig. 7

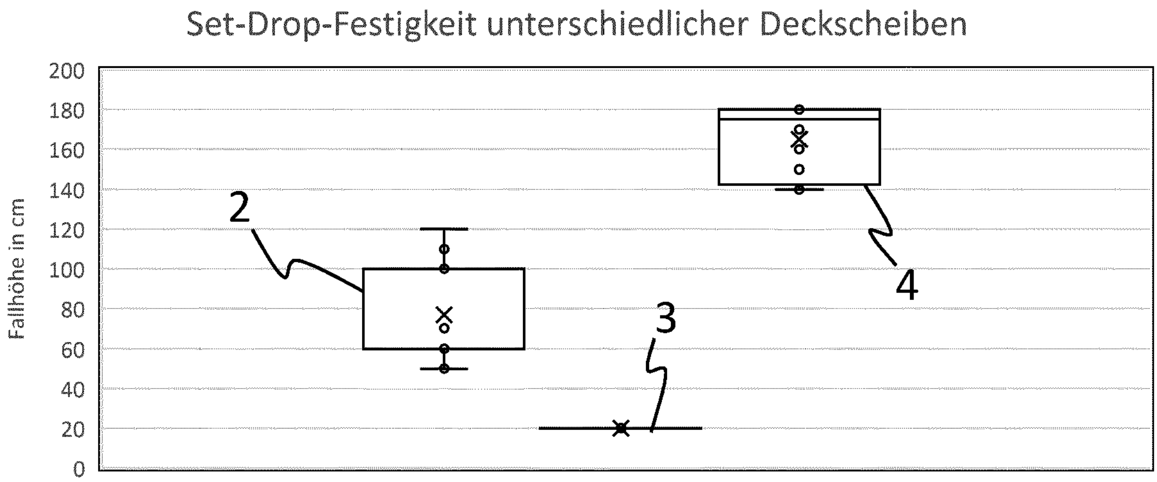
Set-Drop-Festigkeit unterschiedlicher Deckscheiben
Fallhöhe in cm
200
180
160
140
120
100
80
60
40
20
0
2
3
4

Fig. 8

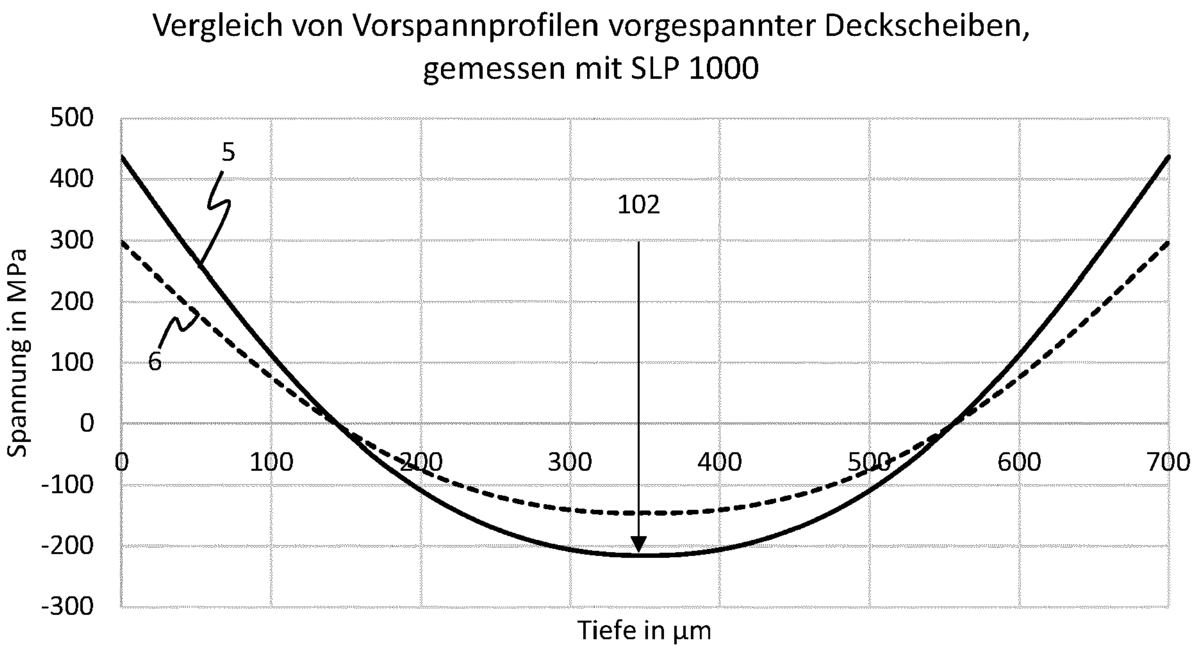
Vergleich von Vorspannprofilen vorgespannter Deckscheiben, gemessen mit SLP 1000
Spannung in MPa
500
400
300
200
100
0
-100
-200
-300
0
100
200
300
400
500
600
700
Tiefe in µm
5
6
102

Fig. 9

Europäisches Patentamt
European Patent Office
Office européen des brevets

# EUROPÄISCHER RECHERCHENBERICHT

Nummer der Anmeldung
EP 22 21 0935

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2020/207660 A1 (LI QING [JP] ET AL) 2. Juli 2020 (2020-07-02) * Beispiele * * Tabellen * ----- | 1-14 | INV. C03C10/00 C03C21/00 C03C3/085 C03C3/087 C03C3/093 C03C3/097 |
| X | WO 2013/171047 A1 (SCHOTT AG [DE]) 21. November 2013 (2013-11-21) * Beispiele * * Tabelle 1 * ----- | 1-14 | |

RECHERCHIERTE SACHGEBIETE (IPC)

C03C

Der vorliegende Recherchenbericht wurde für alle Patentansprüche erstellt

2

| Recherchenort | Abschlußdatum der Recherche | Prüfer |
|---|---|---|
| München | 23. März 2023 | Omegna, Anna |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR.

EP 22 21 0935

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

23-03-2023

| Im Recherchenbericht angeführtes Patentdokument | Datum der Veröffentlichung | Mitglied(er) der Patentfamilie | Datum der Veröffentlichung |
|---|---|---|---|
| US 2020207660 A1 | 02-07-2020 | CN 110958992 A | 03-04-2020 |
| | | US 2020207660 A1 | 02-07-2020 |
| | | WO 2019022035 A1 | 31-01-2019 |
| WO 2013171047 A1 | 21-11-2013 | CN 104411650 A | 11-03-2015 |
| | | CN 109987847 A | 09-07-2019 |
| | | DE 102012104168 A1 | 14-11-2013 |
| | | WO 2013171047 A1 | 21-11-2013 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 20200346969 A1
- US 20210292225 A1


### In der Beschreibung aufgeführte Nicht-Patentliteratur


- **G.H. BEALL et al.** Ion-Exchange in Glass-Ceramics. *Frontiers in Materials,* 2016, vol. 3